(19) Europäisches Patentamt / European Patent Office / Office européen des brevets

(11) **EP 4 432 214 A1**

(12) **EUROPEAN PATENT APPLICATION**
published in accordance with Art. 153(4) EPC

(43) Date of publication:
**18.09.2024 Bulletin 2024/38**

(21) Application number: **22903535.7**

(22) Date of filing: **07.12.2022**

(51) International Patent Classification (IPC):
*G06T 3/40* (2024.01)

(52) Cooperative Patent Classification (CPC):
**G06T 3/40; G06T 5/50; G06T 7/194; G06T 7/70; G06T 7/80**

(86) International application number:
**PCT/CN2022/137331**

(87) International publication number:
**WO 2023/104115 (15.06.2023 Gazette 2023/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.12.2021 CN 202111506482**

(71) Applicant: **Huawei Technologies Co., Ltd.
Shenzhen, Guangdong 518129 (CN)**

(72) Inventors:
• **YANG, Chen**
  **Shenzhen, Guangdong 518129 (CN)**
• **WANG, Xiaoe**
  **Shenzhen, Guangdong 518129 (CN)**
• **YANG, Changjiu**
  **Shenzhen, Guangdong 518129 (CN)**
• **CHENG, Ruiqi**
  **Shenzhen, Guangdong 518129 (CN)**
• **CHEN, Aiyue**
  **Shenzhen, Guangdong 518129 (CN)**
• **TIAN, Jingduo**
  **Shenzhen, Guangdong 518129 (CN)**
• **ZHENG, Shisheng**
  **Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **PANORAMIC VIDEO ACQUIRING METHOD, APPARATUS AND SYSTEM, DEVICE, AND STORAGE MEDIUM**

(57)    A method, an apparatus, a system, and a device for obtaining a panoramic video, and a storage medium are provided, and relate to the field of image processing technologies. The method includes: obtaining a plurality of images captured by a plurality of image capture devices with different fields of view by performing image capture on a target scene in any time period, where the target scene includes a moving target object, and at least one calibration target is disposed on a side that is of the target object and that is close to the plurality of image capture devices; stitching the plurality of images based on the calibration target, to obtain a panoramic image corresponding to the any time period; and then obtaining a panoramic video by using panoramic images respectively corresponding to a plurality of time periods. Image stitching is performed based on the calibration target on the target object. In this case, a stitching process does not depend on matching of feature points in images, and therefore is not affected by noise such as smoke and light on the feature points in the images. In this way, the obtained panoramic image is more stable and more accurate, and further a panoramic video formed by a plurality of panoramic images is more accurate.

Obtain a plurality of to-be-stitched first images — 501a

Stitch the plurality of first images based on a calibration target, to obtain a first panoramic image of a target scenario — 502a

Obtain a plurality of to-be-stitched second images — 503a

Stitch the plurality of second images based on the calibration target, to obtain a second panoramic image of the target scenario — 504a

Obtain a panoramic video, where the panoramic video includes the first panoramic image and the second panoramic image — 505a

FIG. 5a

## Description

This application claims priority to Chinese Patent Application No. 202111506482.4, filed on December 10, 2021 and entitled "METHOD, APPARATUS, SYSTEM, AND DEVICE FOR OBTAINING PANORAMIC IMAGE, AND STORAGE MEDIUM", which is incorporated herein by reference in its entirety.

## TECHNICAL FIELD

This application relates to the field of communication technologies, and in particular, to a method, an apparatus, a system, and a device for obtaining a panoramic image/panoramic video, and a storage medium.

## BACKGROUND

In the field of image processing technologies, for a requirement on obtaining a panoramic image of a target object in a narrow and long space scene, due to problems such as wide observation depth distribution, narrow deployment range of a single image capture device, and a limited observation angle, a plurality of image capture devices need to be deployed in the scene. Then, a complete panoramic image of the target object in the scene can be obtained by stitching images captured by the plurality of image capture devices.

An example in which the image capture device is a camera is used. In the conventional technology, feature points in images captured by adjacent cameras are matched according to a speeded up robust features (speeded up robust features, SURF) algorithm, then to-be-stitched images are transformed into a same pixel coordinate system based on the feature points, and pixel fusion is performed on pixels of different images in the same coordinate system according to an image fusion algorithm, to implement image stitching. In this way, a panoramic image is obtained.

However, a process of matching the feature points in the images depends on accuracy of matching of the feature points. For the narrow and long space scene, because a parallax between the adjacent cameras is large, accuracy of matching of the feature points is low. Consequently, high accuracy of the obtained panoramic image cannot be achieved.

## SUMMARY

This application provides a method, an apparatus, a system, and a device for obtaining a panoramic image/panoramic video, and a storage medium, so that the panoramic image/panoramic video in a narrow and long space scene including a moving target object is obtained by using a calibration target.

According to a first aspect, a method for obtaining a panoramic video is provided. The method includes: obtaining a plurality of to-be-stitched first images, where the plurality of first images are obtained by a plurality of image capture devices by performing image capture on a target scene in a first time period, the plurality of first images are in a one-to-one correspondence with the plurality of image capture devices, fields of view of the plurality of image capture devices capturing images are different, the target scene includes a moving target object, and at least one calibration target is disposed on a side that is of the target object and that is close to the plurality of image capture devices; and stitching the plurality of first images based on the calibration target, to obtain a first panoramic image of the target scene; and obtaining a plurality of to-be-stitched second images, where the plurality of second images are obtained by the plurality of image capture devices by performing image capture on the target scene in a second time period, and the plurality of second images are in a one-to-one correspondence with the plurality of image capture devices; and stitching the plurality of second images based on the calibration target, to obtain a second panoramic image of the target scene. In this case, a panoramic video including the first panoramic image and the second panoramic image is obtained, and a location of the target object in the second panoramic image is different from that in the first panoramic image. The difference between the location of the target object in the second panoramic image and the location of the target object in the first panoramic image is essentially because relative locations of the image capture devices and the target object change. A location of the target object in a world coordinate system may change, or locations of the image capture devices in a world coordinate system may change.

The first time period and the second time period are two directly adjacent time periods. Optionally, the first time period and the second time period may be directly adjacent image capture periods of the image capture devices, or may be two exposure time periods obtained when the image capture devices capture directly adjacent images. In other words, the first image and the second image that are captured by a same image capture device are directly adjacent frames. A person of ordinary skill in the art may understand that the first time period and the second time period may alternatively be two indirectly adjacent time periods. For example, the first time period is an $i^{th}$ image capture period or exposure time period of an image capture device, and the second time period is an $(i+n)^{th}$ image capture period or exposure time period of the image capture device. Both i and n are integers, and n may be a preset threshold, for example, 1, 2, 3, 4, 5, or .... When n is equal to 1, the two time periods are directly adjacent. When n is greater than 1, the two time periods are indirectly adjacent. In this case, the first image and the second image that are captured by the same image capture device are indirectly adjacent frames. That is, the image capture device further captures another frame between the first image and the second image.

Image stitching is performed based on the calibration target on the target object. In this case, a stitching process does not depend on matching of feature points in images, and therefore is not affected by noise such as smoke and light on the feature points in the images. In this way, the obtained panoramic image is more stable and more accurate, and further a panoramic video formed by a plurality of panoramic images is more accurate.

In a possible implementation, the plurality of image capture devices for capturing the second images are the same as the plurality of image capture devices for capturing the first images. Optionally, the plurality of image capture devices for capturing the second images are different from the plurality of image capture devices for capturing the first images. For example, five image capture devices are deployed in the target scene, image capture devices for capturing the first images are a first image capture device, a second image capture device, and a third image capture device, and image capture devices for capturing the second images are the second image capture device, the third image capture device, a fourth image capture device, and a fifth image capture device.

In a possible implementation, the method further includes: stitching the plurality of first images based on a configuration parameter and the calibration target, to obtain the first panoramic image of the target scene; and stitching the plurality of second images based on the configuration parameter and the calibration target, to obtain the second panoramic image of the target scene. The configuration parameter includes at least one of size information of the target object, location information of the calibration target, and a type of the calibration target. The images are stitched based on the calibration target and the configuration parameter, so that the obtained panoramic image is more accurate.

In a possible implementation, a process of stitching the plurality of first images based on a configuration parameter and the calibration target, to obtain the first panoramic image of the target scene is: obtaining a first calibration result based on the calibration target, where the first calibration result includes relative pose information of the plurality of image capture devices and the target object in the first time period; stitching the plurality of first images based on the first calibration result and the configuration parameter, to obtain the first panoramic image of the target scene. Similarly, a process of stitching the plurality of second images based on the configuration parameter and the calibration target, to obtain the second panoramic image of the target scene is: obtaining a second calibration result based on the calibration target, where the second calibration result includes relative pose information of the plurality of image capture devices and the target object in the second time period; and stitching the plurality of second images based on the second calibration result and the configuration parameter, to obtain the second panoramic image of the target scene.

Image stitching is performed based on a calibration result that is obtained based on the calibration target on the target object. In this case, a stitching process does not depend on matching of feature points in images, and therefore is not affected by noise such as smoke and light on the feature points in the images. In addition, the calibration result can be obtained again after relative locations of the plurality of image capture devices and the target object change. In this way, the obtained panoramic image is more accurate.

In a possible implementation, the target object is a mine shearer, and the target scene is a coal mining working face. The panoramic image of the mine shearer on the coal mining working face is obtained according to the method provided in this application, the relative pose information of the mine shearer and the image capture device is obtained through dynamic calibration, and images are stitched based on the accurate relative pose information. The stitching process does not depend on matching of the feature points in the images, and therefore is not affected by smoke and dust in a coal mining working environment, so that a stitching effect of the mine shearer in the panoramic image is accurate and stable.

In a possible implementation, the plurality of first images include at least two third images, and each third image includes the target object; and the stitching the plurality of first images based on the first calibration result, to obtain the first panoramic image of the target scene includes: determining a foreground area of each third image based on the first calibration result and the configuration parameter, where the foreground area of each third image includes the target object; stitching the at least two third images based on the foreground area of each third image, to obtain a stitched image including the target object; and obtain the first panoramic image of the target scene based on the stitched image including the target object.

The images are stitched by using the determined foreground area of the third image. This ensures content integrity of the foreground area in the panoramic image obtained through stitching, and avoids content loss or repetition of the foreground area.

In a possible implementation, the determining a foreground area of each third image based on the first calibration result includes: obtaining, based on the first calibration result and the configuration parameter, a projection transformation relationship corresponding to the third image, where the projection transformation relationship indicates a projection relationship between a model coordinate system of a three-dimensional model of the target object and a pixel coordinate system of the third image; obtaining, based on the configuration parameter, coordinate locations that are of a plurality of boundary points on an outer contour of the target object and that are on the three-dimensional model, where the configuration parameter includes the size information of the target object and the location information of the calibrator; projecting, based on the projection transformation relationship, the coordinate locations on the three-dimensional model onto the pixel coordinate system corresponding to the third image, to obtain a projection result; and obtaining a segmentation mask of the target object in the third image based on the projection result. Optionally, the projection transformation relationship may be represented in a form of a projection transformation matrix.

The segmentation mask of the target object in the third image is obtained in a projection manner based on the first calibration result and the configuration parameters such as the size information of the target object and the location information of the calibration target, so that the obtained segmentation mask is more accurate, and then the more accurate foreground area can be obtained based on the segmentation mask.

In a possible implementation, the stitching the at least two third images based on the foreground area of each third image, to obtain a stitched image including the target object includes: stitching the third images to obtain a first stitched image; stitching foreground areas of the third images to obtain a second stitched image; and fusing the first stitched image and the second stitched image to obtain the stitched image including the target object. After the foreground area of the third image is determined, the stitched image including the target object may be obtained by through stitching in different manners, so that flexibility of obtaining the panoramic image is higher.

In a possible implementation, the stitching foreground areas of the third images to obtain a second stitched image includes: for any two adjacent third images, determining a reference area on the three-dimensional model of the target object based on foreground areas of the any two third images and the first calibration result, and determining a foreground stitching location on the reference area, where both the any two third images includes the reference area; projecting the foreground stitching location onto the any two third images based on the projection transformation relationship, to obtain foreground stitching lines on the any two third images; and stitching the any two third images based on the foreground stitching lines, to obtain the second stitched image.

In this way, the foreground stitching location is selected on the three-dimensional model of the target object, and then the foreground stitching location is projected onto a corresponding third image, to obtain the foreground stitching lines on the third image. Stitching is performed based on the foreground stitching line on each third image, to implement image stitching based on the foreground area. This ensures integrity of the target object in the panoramic image.

In a possible implementation, the target object moves in the target scene. After the determining a foreground stitching location on the reference area, the method further includes: obtaining a correspondence between a motion speed of the target object and a movement speed of the stitching location; and determining, based on the correspondence, the foreground stitching location on the three-dimensional model in the second time period.

In this way, the foreground stitching location on the three-dimensional model of the target object in a next period is determined based on the correspondence between the motion speed of the target object and the movement speed of the stitching location. This improves efficiency of obtaining the foreground stitching location on the three-dimensional model of the target object in the second period, and can ensure that the stitching location changes smoothly without a sudden change, so that quality of the panoramic image obtained through stitching is further ensured.

In a possible implementation, the stitching the third images to obtain a first stitched image includes: for the any two adjacent third images, determining, based on the first calibration result, an overlapping field of view of image capture devices corresponding to the any two third images in the target scene, and selecting a background stitching location within the overlapping field of view; projecting the background stitching location onto the any two third images based on the projection transformation relationship, to obtain background stitching lines on the any two third images; and stitching the any two third images based on the background stitching lines, to obtain the first stitched image.

The background stitching location is selected within the overlapping field of view of the image capture devices corresponding to the any two third images in the target scene, and the first stitched image is obtained in a projection manner, so that accuracy of the first stitched image is higher. In addition, close-ups can be switched freely and accurately based on a spatial location of the target object and an imaging location of the target object on the image.

In a possible implementation, the fusing the first stitched image and the second stitched image to obtain the stitched image including the target object includes: aligning a target location in the first stitched image with that in the second stitched image, to obtain an aligned first stitched image and an aligned second stitched image; obtaining, based on the first calibration result, segmentation masks of the target object that correspond to at least two third images; and fusing the aligned first stitched image and the aligned second stitched image based on the segmentation masks of the target object, to obtain the stitched image including the target object. The target location of the first stitched image is first aligned with that in the second stitched image, and then the aligned first stitched image and the aligned second stitched image are fused based on the segmentation masks of the target object, so that the obtained stitched image including the target object are more accurate.

In a possible implementation, the stitching the at least two third images based on the foreground area of each third image, to obtain a stitched image including the target object includes: when at least one third image includes an obstacle, stitching the third images based on the foreground area of each third image, to obtain the stitched image including the target object.

Different stitching manners are selected based on whether the obstacle is included. This avoids that an effect of the stitched image is affected by breakage or repetition of the obstacle in an image fusion process, and improves accuracy of the obtained panoramic image.

In a possible implementation, the target object is the mine shearer. The obtaining, based on the configuration parameter, coordinate locations that are of a plurality of boundary points on an outer contour of the target object and that are on a three-dimensional model of the target object includes: obtaining a running angle of a rocker arm of the mine shearer; and obtaining, based on the running angle and configuration information, the coordinate locations that are of the plurality of boundary points on the outer contour of the target object and that are on the three-dimensional model of the target object.

The size information of the target object can be updated in real time based on the running angle of the rocker arm of the mine shearer, so that the obtained spatial coordinate locations of the plurality of boundary points on the outer contour of the mine shearer are more accurate, positioning accuracy of the segmentation mask is improved, and accuracy of the obtained panoramic image is further improved.

In a possible implementation, after the obtaining the stitched image including the target object, the method further includes: selecting a plurality of points on a horizontal central axis of the target object, and obtaining, based on the projection transformation relationship, a plurality of projected points corresponding to the plurality of points on the stitched image including the target object; and performing, based on a horizontal ratio of intervals between the plurality of projected points, scaling transformation on the stitched image including the target object, to obtain the stitched image including the target object.

Scaling transformation is performed on the stitched image including the target object based on the horizontal ratio of the intervals between the plurality of projected points corresponding to the plurality of points that are selected at equal intervals on the horizontal central axis of the target object and that are on the stitched image including the target object, to implement front-view correction, so that a structure ratio of the target object in the stitched image does not continuously change with an observation field of view, and a viewing effect is not affected.

In a possible implementation, the obtaining the first panoramic image of the target scene based on the stitched image including the target object includes: stitching fourth images that do not include the target object in the plurality of first images, to obtain a stitched image that does not include the target object; and stitching the stitched image that does not include the target object and the stitched image including the target object, to obtain the first panoramic image of the target scene. The stitched image including the target object and the stitched image that does not include the target object are separately obtained, and both the stitched images are stitched to obtain the first panoramic image of the target object. In this way, the first panoramic image is more accurate, and stitching efficiency is improved.

In a possible implementation, the stitching the plurality of first images based on the calibration target, to obtain a first panoramic image of the target scene includes: obtaining a first calibration result based on the calibration target, where the first calibration result includes relative pose information of the plurality of image capture devices and the target object in the first time period; for any two adjacent first images, determining, based on the first calibration result, an overlapping field of view of image capture devices corresponding to the any two first images in the target scene, and selecting a background stitching location within the overlapping field of view; projecting the background stitching location onto the any two first images based on a projection transformation relationship, to obtain background stitching lines on the any two first images; and stitching the any two first images based on the background stitching lines, to obtain the first panoramic image of the target scene.

The background stitching location is selected within the overlapping field of view of the image capture devices corresponding to the any two first images in the target scene, and the first panoramic image is obtained in a projection manner, so that accuracy of the first panoramic image is higher. In addition, close-ups can be switched freely and accurately based on a spatial location of the target object and an imaging location of the target object on the image.

In a possible implementation, the obtaining a first calibration result based on the calibration target includes: receiving the first calibration result sent by the image capture devices, where the first calibration result is determined by the image capture devices based on the calibration target included in the first images.

In the manner of receiving the first calibration result sent by the image capture devices, a computing amount in an image stitching process can be reduced, and a delay in obtaining the panoramic image caused by the computing amount is further reduced, so that efficiency of obtaining the panoramic image is improved.

In a possible implementation, the obtaining a first calibration result based on the calibration target includes: detecting the calibration target in the plurality of first images, and determining, based on a detection result, third images including the target object; and performing location calibration on the calibration target in the third images, to obtain the first calibration result. Detection is performed on the calibrated object in the first images, and the first calibration result is obtained by performing location calibration on the calibration target based on the detection result, so that the obtained calibration result is more accurate. In addition, in the manner of obtaining the calibration result based on the calibration target, feature registration is avoided, and therefore impact of an external environment like smoke and light is avoided, so that the method for obtaining a panoramic image has better stability and higher accuracy.

In a possible implementation, the performing location calibration on the calibration target in the third images includes: detecting a corner in the third images; when four or more corners are detected, solving a homography transformation equation by using pixel coordinates of the corners in the images and known spatial coordinates of the corners in the target object; and obtaining, based on a solution result, relative pose information of an image capture device capturing the third image and the target object in the first time period. Location positioning is performed by using the pixel coordinates of the corners in the third images in the images and the known spatial coordinates of the corners in the target object, so that the obtained relative pose information of the image capture device and the target object is more accurate.

In a possible implementation, the target object is the mine shearer, and the image capture device is deployed on a support. The obtaining a first calibration result based on the calibration target includes: in response to motion of the support, obtaining a first forward slip amount and a first pillar height of the support before the motion, and a second forward slip amount and a second pillar height of the support after the motion; updating an extrinsic parameter matrix of the image capture device based on the first forward slip amount, the first pillar height, the second forward slip amount, and the second pillar height of the support; and determining the first calibration result based on an updated extrinsic parameter matrix and the calibration target included in the plurality of first images.

External transfer information of the support motion is obtained, so that accuracy of the first calibration result obtained after the support motion is improved, an image stitching error caused by untimely calibration after the support motion is avoided, so that stability of the obtained panoramic image can be improved.

In a possible implementation, the type of the at least one calibration target is a checkerboard, a QR code, or a customized pattern. The at least one calibration target is disposed on the target object by using a metal plate, a plastic plate, a cardboard, a cloth, glass, ceramics, quartz or a printed matter that is easy to paste, through paint printing, through paint spraying, or in another manner.

Calibration targets of different types can be disposed on the target object, and there are different disposing manners. In this way, the calibration target can be disposed more flexibly, and popularization of the method is increased.

It should be noted that the foregoing process of stitching the plurality of first images based on the first calibration result to obtain the first panoramic image of the target scene is the same as a principle of stitching the plurality of second images based on the second calibration result to obtain the second panoramic image of the target scene. Therefore, the second panoramic image may be obtained by referring to the manner of obtaining the first panoramic image. Details are not described again.

According to a second aspect, an apparatus for obtaining a panoramic video is provided. The apparatus includes:

a first obtaining module, configured to obtain a plurality of to-be-stitched first images, where the plurality of first images are obtained by a plurality of image capture devices by performing image capture on a target scene in a first time period, the plurality of first images are in a one-to-one correspondence with the plurality of image capture devices, fields of view of the plurality of image capture devices capturing images are different, the target scene includes a moving target object, and at least one calibration target is disposed on a side that is of the target object and that is close to the plurality of image capture devices; a stitching module, configured to stitch the plurality of first images based on the calibration target, to obtain a first panoramic image of the target scene, where

the first obtaining module is further configured to obtain a plurality of to-be-stitched second images, where the plurality of second images are obtained by the plurality of image capture devices by performing image capture on the target scene in a second time period, and the plurality of second images are in a one-to-one correspondence with the plurality of image capture devices; and

the stitching module is further configured to stitch the plurality of second images based on the calibration target, to obtain a second panoramic image of the target scene; and

a second obtaining module, configured to obtain a panoramic video, where the panoramic video includes the first panoramic image and the second panoramic image, and a location of the target object in the second panoramic image is different from that in the first panoramic image.

In a possible implementation, the stitching module is configured to: stitch the plurality of first images based on a configuration parameter and the calibration target, to obtain the first panoramic image of the target scene; and stitch the plurality of second images based on the configuration parameter and the calibrator, to obtain the second panoramic image of the target scene. The configuration parameter includes at least one of size information of the target object, location information of the calibration target, and a type of the calibration target.

In a possible implementation, the target object is a mine shearer, and the target scene is a coal mining working face.

In a possible implementation, the stitching module is configured to: obtain a first calibration result based on the calibration target, where the first calibration result includes relative pose information of the plurality of image capture devices and the target object in the first time period; stitch the plurality of first images based on the first calibration result and the configuration parameter, to obtain the first panoramic image of the target scene; obtain a second calibration result based on the calibration target, where the second calibration result includes relative pose information of the plurality of image capture devices and the target object in the second time period; and stitch the plurality of second images based on the second calibration result and the configuration parameter, to obtain the second panoramic image of the target scene.

In a possible implementation, the plurality of first images include at least two third images, and each third image includes the target object. The stitching module is configured to: determine a foreground area of each third image based on the first calibration result and the configuration parameter, where the foreground area of each third image includes the target object; stitch the at least two third images based on the foreground area of each third image, to obtain a stitched image including the target object; and obtain the first panoramic image of the target scene based on the stitched image including the target object.

In a possible implementation, the stitching module is configured to: obtain, based on the first calibration result, a projection transformation relationship corresponding to the third image, where the projection transformation relationship indicates a projection relationship between a model coordinate system of a three-dimensional model of the target object and a pixel coordinate system of the third image; obtain, based on the configuration parameter, coordinate locations that are of a plurality of boundary points on an outer contour of the target object and that are on the three-dimensional model of the target object, where the configuration parameter includes the size information of the target object and the location information of the calibration target; project, based on the projection transformation relationship, the coordinate locations on the three-dimensional model onto the pixel coordinate system corresponding to the third image, to obtain a projection result; obtain a segmentation mask of the target object in the third image based on the projection result; and determine the foreground area of the third image based on the segmentation mask.

In a possible implementation, the stitching module is configured to: stitch the third images to obtain a first stitched image; stitch foreground areas of the third images to obtain a second stitched image; and fuse the first stitched image and the second stitched image to obtain the stitched image including the target object.

In a possible implementation, the stitching module is configured to: for any two adjacent third images, determine a reference area on the three-dimensional model of the target object based on foreground areas of the any two third images and the first calibration result, and determine a foreground stitching location on the reference area, where both the any two third images includes the reference area; project the foreground stitching location onto the any two third images based on the projection transformation relationship, to obtain foreground stitching lines on the any two third images; and stitch the any two third images based on the foreground stitching lines, to obtain the second stitched image.

In a possible implementation, the target object moves in the target scene. The stitching module is further configured to: obtain a correspondence between a motion speed of the target object and a movement speed of the stitching location; and determine, based on the correspondence, the foreground stitching location on the three-dimensional model of the target object in the second time period.

In a possible implementation, the stitching module is configured to: for the any two adjacent third images, determine, based on the first calibration result, an overlapping field of view of image capture devices corresponding to the any two third images in the target scene, and select a background stitching location within the overlapping field of view; project the background stitching location onto the any two third images based on the projection transformation relationship, to obtain background stitching lines on the any two third images; and stitch the any two third images based on the background stitching lines, to obtain the first stitched image.

In a possible implementation, the stitching module is configured to: align a target location in the first stitched image with that in the second stitched image, to obtain an aligned first stitched image and an aligned second stitched image; obtain, based on the first calibration result, segmentation masks of the target object that correspond to at least two third images; and fuse the aligned first stitched image and the aligned second stitched image based on the segmentation masks of the target object, to obtain the stitched image including the target object.

In a possible implementation, the stitching module is configured to: when at least one third image includes an obstacle, stitch the third images based on the foreground area of each third image, to obtain the stitched image including the target object.

In a possible implementation, the target object is the mine shearer. The stitching module is configured to: obtain a running angle of a rocker arm of the mine shearer; and obtain, based on the running angle and the configuration parameter, the coordinate locations that are of the plurality of boundary points on the outer contour of the target object and that are on the three-dimensional model of the target object.

In a possible implementation, the stitching module is further configured to: select a plurality of points at equal intervals on a horizontal central axis of the target object, and obtain, based on the projection transformation relationship, a plurality of projected points corresponding to the plurality of points on the stitched image including the target object; and perform, based on a horizontal ratio of intervals between the plurality of projected points, scaling transformation on the stitched image including the target object, to obtain the stitched image that includes the target object and on which intervals between the plurality of projected points are equal.

In a possible implementation, the stitching module is configured to: obtain a first calibration result based on the calibration target, where the first calibration result includes relative pose information of the plurality of image capture devices and the target object in the first time period; stitch fourth images that do not include the target object in the plurality of first images, to obtain a stitched image that does not include the target object; and stitch the stitched image that does not include the target object and the stitched image including the target object, to obtain the first panoramic image of the target scene.

In a possible implementation, the stitching module is configured to: for any two adjacent first images, determine, based on the first calibration result, an overlapping field of view of image capture devices corresponding to the any two first images in the target scene, and select a background stitching location within the overlapping field of view; project the background stitching location onto the any two first images based on a projection transformation relationship, to obtain background stitching lines on the any two first images; and stitch the any two first images based on the background stitching lines, to obtain the first panoramic image of the target scene.

In a possible implementation, the stitching module is configured to receive the first calibration result sent by the image capture devices, where the first calibration result is determined by the image capture devices based on the calibration target included in the first images.

In a possible implementation, the stitching module is configured to: detect the calibration target in the plurality of first images, and determine, based on a detection result, third images including the target object; and perform location calibration on the calibration target in the third image, to obtain the first calibration result.

In a possible implementation, the stitching module is configured to: detect a corner in the third images; when four or more corners are detected, solve a homography transformation equation by using pixel coordinates of the corners in the images and known spatial coordinates of the corners in the target object; and obtain, based on a solution result, relative pose information of an image capture device capturing the third image and the target object in the first time period.

In a possible implementation, the target object is the mine shearer, and the image capture device is deployed on a support. The stitching module is configured to: in response to motion of the support, obtain a first forward slip amount and a first pillar height of the support before the motion, and a second forward slip amount and a second pillar height of the support after the motion; update an extrinsic parameter matrix of the image capture device based on the first forward slip amount, the first pillar height, the second forward slip amount, and the second pillar height of the support; and determine the first calibration result based on an updated extrinsic parameter matrix and the calibration target included in the plurality of first images.

In a possible implementation, the type of the at least one calibration target is a checkerboard, a QR code, or a customized pattern. The at least one calibration target is disposed on the target object by using a metal plate, a plastic plate, a cardboard, a cloth, glass, ceramics, quartz or a printed matter that is easy to paste, paint printing, paint spraying, or in another manner.

In a possible implementation, the target object is the mine shearer, and the target scene is the coal mining working face.

According to a third aspect, a system for obtaining a panoramic video is provided. The system includes a video stitching device and at least two image capture devices. The image capture device is configured to perform image capture on a target scene. The video stitching device is configured to perform the method according to any one of the first aspect or the possible implementations of the first aspect to stitch images captured by the at least two image capture devices, to obtain a panoramic video.

Optionally, the system further includes a display device. The display device is configured to display the panoramic video obtained by the video stitching device by performing the method according to any one of the first aspect or the possible implementations of the first aspect.

According to a fourth aspect, an electronic device is provided. The electronic device includes a processor. The processor is coupled to a memory, and the memory stores at least one program instruction or code. The at least one program instruction or code is loaded and executed by the processor, so that the electronic device implements the method for obtaining a panoramic video according to any one of the first aspect or the possible implementations of the first aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a fifth aspect, a computer-readable storage medium is provided. The storage medium stores at least one instruction. The instruction is loaded and executed by a processor, so that a computer implements the method for obtaining a panoramic video according to any one of the first aspect or the possible implementations of the first aspect.

According to a sixth aspect, a computer program (product) is provided. The computer program (product) includes computer program code. When the computer program code is run by a computer, the computer is enabled to perform the method according to the foregoing aspects.

According to a seventh aspect, a chip is provided, and includes a processor. The processor is configured to invoke, from a memory, and run instructions stored in the memory, so that an electronic device on which the chip is installed performs the method for obtaining a panoramic video according to any one of the first aspect or the possible implementations of the first aspect.

It should be understood that, for beneficial effects achieved by the technical solutions in the second, third, fourth, fifth, sixth, or seventh aspect and the corresponding possible implementations in this application, refer to the technical effects achieved in the first aspect and the corresponding possible implementations. Details are not described herein again.

## BRIEF DESCRIPTION OF DRAWINGS

FIG. 1 is an environment diagram of a coal mining working face scene according to an embodiment of this application;

FIG. 2 is a schematic diagram of a working scale for capturing an image of a coal mining working face according to an embodiment of this application;

FIG. 3 is a comparison diagram of images captured by two adjacent image capture devices in a same time period according to an embodiment of this application;

FIG. 4 is a schematic diagram of a structure of a system for obtaining a panoramic image according to an embodiment of this application;

FIG. 5a is a flowchart of a method for obtaining a panoramic video according to an embodiment of this application;

FIG. 5b is a flowchart of a method for obtaining a panoramic image according to an embodiment of this application;

FIG. 5c is a flowchart of another method for obtaining a panoramic video according to an embodiment of this application;

FIG. 6 is a schematic diagram of a deployment result of a calibration target according to an embodiment of this application;

FIG. 7 is a schematic diagram of a top view model of a mine shearer according to an embodiment of this application;

FIG. 8 is a schematic diagram of a UI interface for inputting a configuration parameter according to an embodiment of this application;

FIG. 9 is a schematic diagram of a segmentation mask of a mine shearer according to an embodiment of this application;

FIG. 10 is a comparison diagram of front-view correction according to an embodiment of this application;

FIG. 11 is a schematic diagram of fusing a first stitched image and a second stitched image according to an embodiment of this application;

FIG. 12 is a schematic diagram of a display interface of a panoramic video according to an embodiment of this application;

FIG. 13 is a schematic diagram of a structure of a system for stitching two images according to an embodiment of this application;

FIG. 14a is a schematic diagram of a structure of an apparatus for obtaining a panoramic video according to an embodiment of this application;

FIG. 14b is a schematic diagram of a structure of an apparatus for obtaining a panoramic image according to an embodiment of this application;

FIG. 15 is a schematic diagram of a structure of an electronic device according to an embodiment of this application; and

FIG. 16 is a schematic diagram of a structure of a server according to an embodiment of this application.

## DESCRIPTION OF EMBODIMENTS

To make the objectives, technical solutions, and advantages of this application clearer, the following further describes implementations of this application in detail with reference to accompanying drawings.

Before the technical solutions provided in embodiments of this application are described, the following first briefly describes an application scenario of a method for obtaining a panoramic video provided in this application.

When a target object is located in a narrow and long space scene, because a field of view of a single image capture device is limited, if a panoramic image including the target object needs to be obtained, a plurality of image capture devices need to be deployed in the scene, to capture a plurality of images including the target object. Because the plurality of images including the target object may include some content of the target object, the plurality of images including the target object are stitched, to obtain a complete panoramic image of the target object in the scene.

Therefore, performance of image stitching directly affects an effect of the obtained panoramic image. However, deployment ranges of the image capture devices in the narrow and long space scene are narrow, fields of view of the image capture devices are different, and the target object in the image and a background of the image are not on a same stitching plane. Consequently, in the conventional technology, an effect of a panoramic image obtained through stitching by performing matching of feature points based on a same registration plane is poor.

It may be understood that, in addition to obtaining a static panoramic image, the foregoing problem also exists in obtaining a dynamic panoramic video. Especially, when relative locations of the target object and the image capture devices change, matching of the feature points needs to be performed again for a plurality of images corresponding to each moment. Because an algorithm for matching of the feature points has poor stability and high complexity, stability of an obtained panoramic video is poor.

Based on this, embodiments of this application provide a method for obtaining a panoramic video. A calibration target is deployed on a target object, and images are stitched based on the calibration target. Because image stitching is not affected by a field of view of an image capture device, the obtained panoramic image is more complete. In addition, because a stitching process does not depend on accuracy of matching of the feature points in images, the obtained panoramic image is more accurate.

It should be noted that the method for obtaining a panoramic image provided in embodiments of this application may alternatively be applied to obtaining of a panoramic video. A plurality of images corresponding to each time period in a plurality of videos are stitched according to the method for obtaining a panoramic image provided in embodiments of this application, to obtain a panoramic image corresponding to each time period. The panoramic image corresponding to each time period is played frame by frame, that is, the panoramic video. In addition, after the relative locations of the target object and the image capture devices change, a calibration result may be obtained again, and the panoramic image is obtained based on the re-obtained calibration result. Therefore, accuracy is higher.

For example, an application scenario of the method for obtaining a panoramic video provided in embodiments of this application may be: obtaining a panoramic video of a mine shearer in a coal mining tunnel; or obtaining a panoramic video of a target object in a corridor or an exhibition hall; or obtaining a panoramic video of a production pipeline in a factory; or obtaining a panoramic video of a railway train traveling on a railway track.

Next, to describe the application scenario of the method for obtaining a panoramic video provided in embodiments of this application more clearly, an example in which a panoramic video of a mine shearer in a coal mining tunnel is obtained is used for detailed description. A target scene is a coal mining working face, and a target object is a mine shearer.

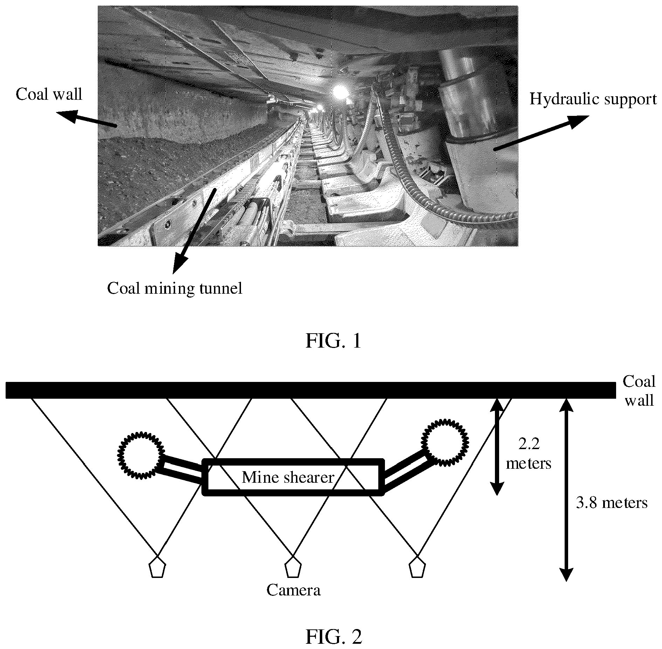

With development of intelligent coal mining, coal mining is mainly completed by mechanical devices such as the mine shearer and a support. Because of a high mechanization rate of coal mining, the coal mining working face is mainly fully mechanized coal mining face, namely, a fully mechanized coal mining face. FIG. 1 is an environment diagram of a coal mining working face scene. As shown in FIG. 1, a working environment of the fully mechanized coal mining face includes a coal mining tunnel, a coal wall, a mine shear (not shown in FIG. 1), and the like. The coal mining tunnel is supported by a plurality of supports. Optionally, the support shown in FIG. 1 is a hydraulic support. The mine shearer cuts the coal wall back and forth in the tunnel for coal mining, and the hydraulic support pushes forward with progress of coal mining to cut the deeper coal wall.

To perform complete panoramic surveillance on the fully mechanized coal mining face, a plurality of image capture devices (for example, a camera lens and a camera) for capturing images need to be deployed on the support, and then a plurality of images captured by the plurality of image capture devices are stitched, to obtain a panoramic image of the mine shear in the tunnel, and implement intelligent video surveillance on the fully mechanized coal mining face based on the obtained panoramic image. In embodiments of this application, the plurality of image capture devices are deployed on the support. Optionally, one image capture device is deployed on every one or two supports. In this case, fields of view of the plurality of image capture devices can cover entire tunnel space, and fields of view of adjacent image capture devices overlap. The field of view indicates a maximum range that can be observed by the image capture device. A larger field of view indicates a larger observation range, that is, a larger display area of a captured image.

FIG. 2 is a schematic diagram of a working scale for capturing an image of a coal mining working face. As shown in FIG. 2, a distance between the coal wall and the mine shearer is 2.2 meters, and a distance between the coal wall and the image capture device is 3.8 meters. It can be learned that an observation depth of the fully mechanized coal mining face is widely distributed, and deployment ranges of the image capture devices are narrow. Consequently, images cannot be stitched simultaneously because of a great difference between fields of view of adjacent image capture devices and different depths of planes. To be specific, scene content (the coal wall, the top and bottom of the support, and the mine shearer) of the fully mechanized coal mining face is not on a same stitching plane. Optionally, a plane on which the coal wall is located is referred to as a background area of an image, and a plane on which the mine shearer is located is referred to as a foreground area of the image.

In the conventional technology, registration is performed directly based on feature points in images, and then a plurality of videos are stitched based on a same plane through pixel fusion. Because of a single feature and similar textures on the coal wall, in a process of registering the feature points in the images, a registration result is obtained mainly based on the plane of the coal wall. Therefore, video stitching based on the plane of the coal wall is implemented. However, for planes of the mine shearer that have different depths, mine shearer content in a stitched panoramic image may be missing or appear repeatedly. In addition, accuracy of registration of the feature points in the images is affected by large dust generated in the coal wall tunnel when the mine shearer works.

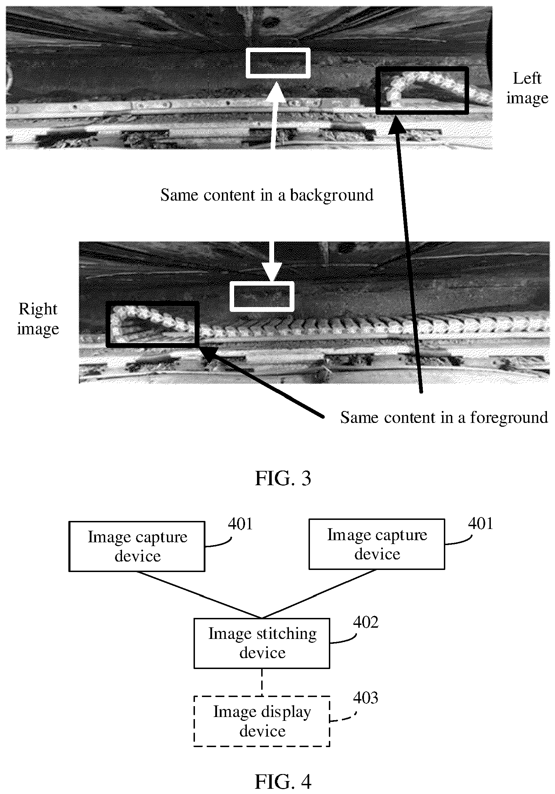

For example, FIG. 3 is a comparison diagram of images captured by two adjacent image capture devices in a same time period. It can be learned that a small rectangular area in a left image and a small rectangular area in a right image are same content in a background (namely, the plane of the coal wall), and a large rectangular area in the left image and a large rectangular area in the right image are same content in a foreground (namely, the plane of the mine shearer). If image stitching is performed based on the small rectangular area of the plane of the coal wall, the mine shearer content in the large rectangular area may appear twice in a stitched panoramic image.

Based on this, according to the method for obtaining a panoramic video provided in embodiments of this application, the panoramic image of the mine shearer in the tunnel in each time period can be obtained, to implement panoramic video surveillance on the entire fully mechanized coal mining face. A time period for image stitching may be set based on an application scenario, or may be determined based on a frame rate of an image captured by an image capture device. A length of the time period is not limited in embodiments of this application.

FIG. 4 shows a system for obtaining a panoramic image according to an embodiment of this application. As shown in FIG. 4, the system includes at least two image capture devices 401 and an image stitching device 402. The image capture devices 401 may be communicatively connected to the image stitching device 402. Optionally, the image capture devices 401 may be directly or indirectly connected to the image stitching device 402 in a wired or wireless communication manner. This is not limited in this application.

In a possible implementation, the image capture devices 401 send captured to-be-stitched images to the image stitching device 402. To be specific, the image stitching device 402 obtains data of the to-be-stitched images from the image capture devices 401; or the image stitching device 402 may obtain data of the to-be-stitched images from a local cache. Optionally, the image stitching device 402 separately stitches the to-be-stitched images; or the image stitching device 402 and the image capture devices 401 jointly stitch the to-be-stitched images.

For example, after capturing the to-be-stitched images, the image capture devices 401 perform calibration target detection on the captured to-be-stitched images, and send an obtained calibration result and the to-be-stitched images to the image stitching device 402. The image stitching device 402 stitches the to-be-stitched images based on the calibration result, to obtain a panoramic image. In other words, the image capture devices 401 and the image stitching device 402 jointly undertake computing work of obtaining the panoramic image. In this way, a requirement on a computing capability of the image stitching device 402 can be reduced, and stability and real-time performance of obtaining the panoramic image are improved.

The image capture device 401 may be any device, for example, a camera lens or a camera of various types, that can capture an image. The image stitching device 402 may be a server, or may be a terminal on which a client supporting an image stitching function is installed. Optionally, the server may be a server, or may be a server cluster including a plurality of servers, or may be a cloud computing service center. The terminal may be any electronic product, for example, a PC (Personal Computer, personal computer), a mobile phone, a smartphone, a PDA (Personal Digital Assistant, personal digital assistant), a wearable device, a pocket personal computer (Pocket PC), a tablet computer, a smart in-vehicle infotainment, a smart television, or a smart speaker, that can perform human machine interaction with a user through a keyboard, a touchpad, a touchscreen, a remote control, a voice interaction device, a handwriting device, or in one or more manners.

Optionally, the system further includes an image display device 403. The image display device 403 may be directly or indirectly connected to the image stitching device 402 in a wired or wireless communication manner. This is not limited in embodiments of this application. In a possible implementation, the image stitching device 402 sends the obtained panoramic image to the image display device 403, and the image display device 403 displays the received panoramic image. The image display device 403 may be a server, or may be a terminal on which a client supporting an image display function is installed. For example, the image display device 403 may be a mobile device like a mobile phone, a computer display, a large screen, or the like.

In a process of obtaining a panoramic video, the image stitching device 402 may be a video stitching device, and the image display device 403 may be a video display device. The video stitching device is configured to stitch, based on the calibration target, the to-be-stitched images to obtain a panoramic image, and stitch the panoramic images to obtain the panoramic video. The video display device is configured to display the panoramic video obtained by the video stitching device.

A person skilled in the art should understand that the foregoing terminal and server are merely examples. Another existing or future terminal or server that is applicable to this application should also fall within the protection scope of this application, and is included herein by reference.

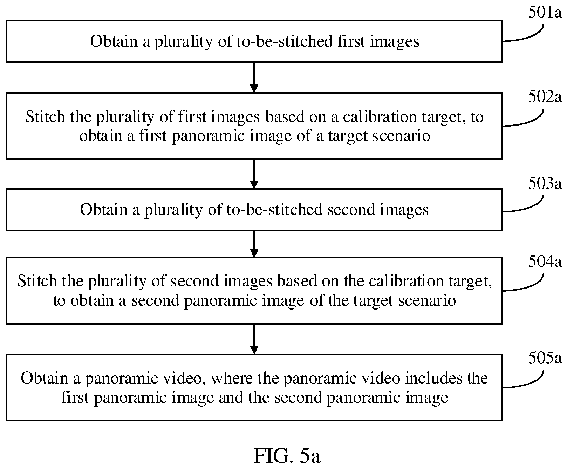

FIG. 5a is a flowchart of a method for obtaining a panoramic video according to an embodiment of this application. The method for obtaining a panoramic video is applicable to the system shown in FIG. 4. The method for obtaining a panoramic video provided in this embodiment of this application is described below by using an example in which a video stitching device performs the method. As shown in FIG. 5a, the method for obtaining a panoramic video provided in this embodiment of this application includes the following step 501a to step 505a.

Step 501a: Obtain a plurality of to-be-stitched first images.

Before a panoramic image is obtained, the plurality of to-be-stitched first images need to be first obtained. A manner of obtaining the plurality of to-be-stitched first images is not limited in embodiments of this application. For example, a plurality of first images captured by a plurality of image capture devices in a same time period may be obtained from the plurality of image capture devices. In addition, a quantity of the plurality of to-be-stitched first images is not limited in embodiments of this application, and may be two, three, four, or the like.

In this embodiment of this application, the plurality of image capture devices perform image capture on a target scene in a first time period, to obtain the plurality of first images. One first image corresponds to one image capture device. In other words, the plurality of first images are in a one-to-one correspondence with the plurality of image capture devices. Fields of view of the plurality of image capture devices capturing images are different, and respectively cover some content in the target scene. Optionally, the target scene includes a moving target object, and at least one calibration target is disposed on a side that is of the target object and that is close to the plurality of image capture devices.

In a possible implementation, because the plurality of image capture devices capture images at different frequencies, accurate moments at which the plurality of image capture devices capture the first images of the target scene are different. Therefore, the plurality of to-be-stitched first images obtained in this embodiment of this application are a plurality of first images obtained after time alignment is performed. In other words, the plurality of image capture devices obtain the images by performing image capture on the target scene in the first time period. For example, the first time period may be a directly adjacent image capture period of the image capture devices, or may be two exposure time periods obtained when the image capture devices capture directly adjacent images. Optionally, a range of the first time period may be set based on experience, or may be flexibly adjusted based on an application scenario. For example, in a scenario in which the target object moves at a high speed, the first time period is 1 millisecond; or in a scenario in which the target object moves at a low speed, the first time period is 1 second.

When quantities of images captured by the plurality of image capture devices in the first time period are different, for an image capture device capturing a plurality of images in the first time period, one image may be selected, as a first image corresponding to the image capture device in the first time period, from the plurality of images captured by the image capture device in the first time period, and stitched with a first image captured by another image capture device in the first time period. For example, there are three image capture devices, and the first time period is 1 second. It is assumed that a first image capture device captures one frame of image in the 1 second, a second image capture device captures two frames of images in the 1 second, and a third image capture device captures three frames of images in the 1 second. In this case, one frame of image may be selected from the two frames of images captured by the second image capture device, and one frame of image may be selected from the three frames of images captured by the third image capture device. Stitching is performed on the one frame of image that corresponds to each of the three image capture devices and that is captured in the 1 second, to obtain a panoramic image in the 1 second.

Optionally, when quantities of images captured by the plurality of image capture devices in the first time period are different, in addition to the foregoing manner of determining the first image corresponding to each image capture device, images captured by an image capture device capturing a small quantity of images may be reused, and stitched with a plurality of first images captured by another image capture device in the first time period, to obtain a plurality of panoramic images in the first time period. The case in which there are three image capture devices, the first time period is 1 second, a first image capture device captures one frame of image in the 1 second, a second image capture device captures two frames of images in the 1 second, and a third image capture device captures three frames of images in the 1 second is still used as an example. The one frame of image captured by the first image capture device in the 1 second, a first frame of image in the two frames of images captured by the second image capture device in the 1 second, and a first frame of image in the three frames of images captured by the third image capture device in the 1 second may be stitched, to obtain a first panoramic image. Then, the one frame of image captured by the first image capture device in the 1 second, a second frame of image in the two frames of images captured by the second image capture device in the 1 second, and a second frame of image in the three frames of images captured by the third image capture device in the 1 second are stitched, to obtain a second panoramic image. The one frame of image captured by the first image capture device in the 1 second, the second frame of image in the two frames of images captured by the second image capture device in the 1 second, and a third frame of image in the three frames of images captured by the third image capture device in the 1 second are stitched, to obtain a third panoramic image. In this way, the three panoramic images are obtained after the images captured by the three image capture devices in the 1 second are stitched.

Optionally, a type of the calibration target is not limited in embodiments of this application. The calibration target may be any pattern design, for example, a checkerboard, a QR code, or a combination of several regular patterns (a customized pattern), in an easily detectable regular shape like a corner, a line segment, or a circle. In addition, a manner in which the calibration target is disposed on the target object is also not limited. For example, the calibration target may be disposed on the target object by using a metal plate, a plastic plate, a paperboard, cloth, glass, ceramics, quartz or an easy-to-paste printed matter, through paint printing, through pigment spraying, or in another manner. Calibration targets of different types can be disposed on the target object, and there are different disposing manners. In this way, the calibration target can be disposed more flexibly, and popularization of the method is increased.

Optionally, if a plurality of calibration targets are disposed on the target object, shapes of the calibration targets are usually distinguishable. For example, one calibration target corresponds to one serial number. Optionally, different corresponding serial numbers can be identified based on shapes of different calibration targets, and locations of the corresponding calibration targets on the target object can be identified based on the different serial numbers.

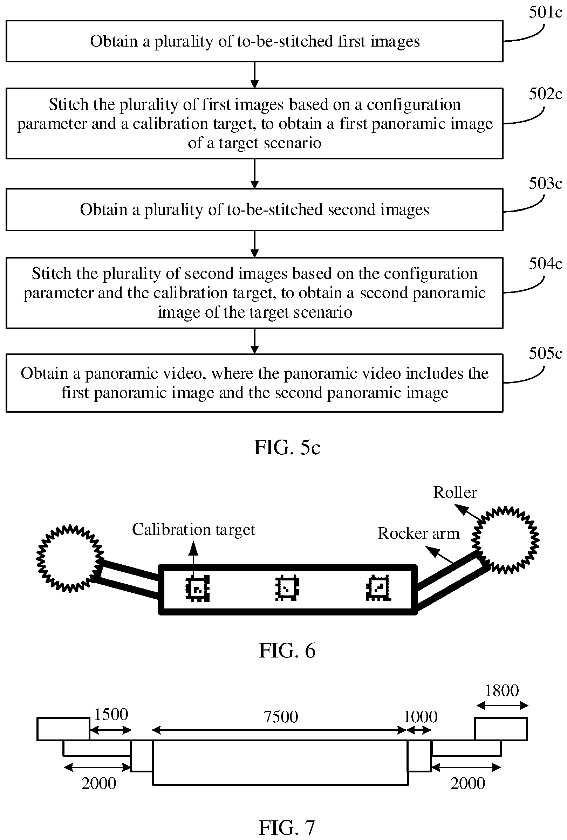

For example, the target object is a mine shearer, and the image capture device is a camera. As shown in FIG. 6, the calibration target is a QR code, and three QR code calibration targets are deployed on an outer surface of a body of the mine shearer, namely, a body surface opposite to a location of the camera, so that an image captured by the camera includes the calibration target. It can be learned that pattern combinations of the three QR codes are different, and the calibration targets move with the mine shearer. Optionally, sizes and deployment locations of the calibration targets are known. After each camera in the target scene performs image capture once, the camera sends a captured image to the video stitching device, and the video stitching device accordingly obtains the plurality of to-be-stitched first images.

Step 502a: Stitch the plurality of first images based on the calibration target, to obtain a first panoramic image of the target scene.

In this embodiment of this application, the stitching the plurality of first images based on the calibration target, to obtain a first panoramic image of the target scene includes: stitching the plurality of first images based on a configuration parameter and the calibration target, to obtain the first panoramic image of the target scene. The configuration parameter includes at least one of size information of the target object, location information of the calibration target, and a type of the calibration target. The images are stitched based on the calibration target and the configuration parameter, so that the obtained panoramic image is more accurate.

Optionally, the stitching the plurality of first images based on a configuration parameter and the calibration target, to obtain the first panoramic image of the target scene includes: obtaining a first calibration result based on the calibration target, where the first calibration result includes relative pose information of the plurality of image capture devices and the target object in the first time period; and stitching the plurality of first images based on the first calibration result and the configuration parameter, to obtain the first panoramic image of the target scene. Image stitching is performed based on a calibration result that is obtained based on the calibration target on the target object. In this case, a stitching process does not depend on matching of feature points in images, and therefore is not affected by noise such as smoke and light on the feature points in the images. In addition, the calibration result can be obtained again after relative locations of the plurality of image capture devices and the target object change. In this way, the obtained panoramic image is more accurate.

In a possible implementation, the obtaining a calibration result based on the calibration target includes: determining the first calibration result based on the calibration target included in the plurality of first images; or receiving the first calibration result sent by the image capture devices, where the first calibration result is determined by the image capture devices based on the calibration target included in the first images.

To be specific, the video stitching device may obtain, by performing location calibration based on the calibration target included in the plurality of first images, the first calibration result obtained based on the calibration target; or the image capture devices may obtain the first calibration result by performing location calibration based on the calibration target in the first images, and then send the obtained first calibration result to the video stitching device. In the manner in which the image capture devices obtain the first calibration result based on the calibration target, a requirement on computing power of the video stitching device can be reduced, and a delay in obtaining a panoramic video caused by a computing amount can be reduced, so that efficiency of obtaining the panoramic video can be improved.

In this embodiment of this application, the plurality of first images include at least two third images, and each third image includes the target object. Because at least one calibration target is disposed on a side that is of the target object and that is close to the plurality of image capture devices, an area that includes the target object and that is in the third image includes the calibration target. The following describes the obtaining a calibration result based on the calibration target by using an example in which the video stitching device determines the first calibration result based on the calibration target included in the plurality of first images. Optionally, there are the following two cases in which the first calibration result is obtained based on the calibration target and a quantity of third images included in the plurality of first images.

Case 1: A quantity of third images is the same as a quantity of first images.

In Case 1, each of the plurality of first images includes the target object. In this case, the obtaining the first calibration result based on the calibration target includes: performing location calibration on the calibration target in the third image, to obtain relative pose information of an image capture device capturing the third image and the target object in the first time period.

A location calibration method is not limited in embodiments of this application. Optionally, the performing location calibration on the calibration target in the third images includes: detecting a corner in the third images; when four or more corners are detected, solving a homography transformation equation by using pixel coordinates of the corners in the images and known spatial coordinates of the corners in the target object; and obtaining, based on a solution result, the relative pose information of the image capture device capturing the third image and the target object in the first time period. The homography transformation equation is used to describe a location mapping relationship of an object between a three-dimensional coordinate system and a pixel coordinate system.

Case 2: A quantity of third images is less than a quantity of first images.

In Case 2, the plurality of first images further include a fourth image that does not include the target object. In other words, the fourth image does not include the calibration target. In this case, the first calibration result obtained based on the calibration target includes two parts: relative pose information of an image capture device capturing the third image and the target object in the first time period, and relative pose information of an image capture device capturing the fourth image and the target object in the first time period.

Optionally, when the quantity of the third images is less than the quantity of the first images, before location calibration is performed on the calibration target in the third image, third images need to be determined from the plurality of first images. In this case, the obtaining a first calibration result based on the calibration target includes: detecting the calibration target in the plurality of first images, and determining, based on a detection result, third images including the target object; and performing location calibration on the calibration target in the third images, to obtain the first calibration result.

In this embodiment of this application, there are at least two third images including the target object. In the third images including the target object, there may be the calibration target on the target object included in each third image. In this case, detection is performed on the calibration target in the plurality of first images. When the third images including the target object are determined based on the detection result, calibration target detection may be first performed on the plurality of first images, and an image in which the calibration target is detected in the detection result is directly used as the third image. Location calibration is performed based on the determined calibration target in the third images, to obtain the first calibration result.

Optionally, in the third images including the target object, some third images may include the target object, but may not include the calibration target on the target object. The third images that include the target object but do not include the calibration target on the target object may be determined based on the third image in which the calibration target is detected, the determined calibration result, and a location relationship between the image capture devices. For example, one calibration target is disposed on the target object, and five image capture devices capture five first images: an image 1, an image 2, an image 3, an image 4, and an image 5. If each of the image 2, the image 3, and the image 4 in the five first images includes the target object, but only the target object in the image 3 includes the calibration target. In this case, the image 3 may be detected based on calibration target detection, and used as the third image. Then, after location calibration is performed based on the calibration target in the image 3 to obtain a calibration result, it can be learned, based on the known calibration result and a configuration parameter like a length of the target object, that an image adjacent to the image 3 should also include the target object. It can be learned, based on the location relationship between the image capture devices, that images adjacent to the image 3 are the image 2 and the image 4. Therefore, the image 2 and the image 4 should also include the target object. In this case, the image 2 and the image 4 are also used as the third images.

In a possible implementation, after the third images including the target object are determined based on the detection result, location information of the target object in the target scene may be determined, and then several image capture devices near a location of the target object are obtained based on the location information. Therefore, when an image including the target object in a next time period is obtained, calibration target detection can be performed directly on the several image capture devices near the location of the target object, and detection does not need to be performed on each to-be-stitched image. This can reduce a specific computing amount, and improve efficiency of obtaining the panoramic video.

It may be understood that, in a scene of dynamically obtaining the panoramic video, third images in which the target object appears in the plurality of first images in the next time period may be further obtained through inference based on a moving rule of the target object. For example, the mine shearer moves at a uniform speed in the tunnel. For 10 first images, if the third images obtained in the time period are a third image, a fourth image, and a fifth image, and the mine shearer runs for a distance till the next time period, the obtained third images are the fourth image, the fifth image, and a sixth image. Therefore, third images that are in the plurality of first images and that correspond to a future time period can be obtained through inference, and the third images do not need to be determined by detecting the calibration target in the first images again, so that a computing amount is further reduced.

In a possible implementation, based on a case in which the at least two third images including the target object are determined through detection performed on the calibration target, an accurate spatial location of the target object may be further obtained in real time with reference to an external sensor, and the determined at least two third images including the target object are verified or filtered, to improve detection accuracy. For example, when a location of the mine shearer is determined based on the calibration target, a location of the support on which the mine shearer is located is obtained in real time to obtain an accurate spatial location of the mine shearer, so that calibration accuracy and stability are further improved.

Optionally, after it is determined that the at least two third images including the target object are obtained, location calibration may be directly performed on the calibration target in the at least two third images, to obtain the relative pose information of the image capture device capturing the third image and the target object in the first time period. In Case 2, in addition to the relative pose information of the image capture device capturing the third image and the target object in the first time period, the relative pose information of the image capture device capturing the fourth image and the target object in the first time period further needs to be obtained.

In a possible implementation, the obtaining the relative pose information of the image capture device capturing the fourth image and the target object in the first time period includes but is not limited to: obtaining relative pose information of the image capture device capturing the fourth image and the image capture device capturing the third image; and obtaining, based on the relative pose information of the image capture device capturing the third image and the target object in the first time period and the relative pose information of the image capture device capturing the fourth image and the image capture device capturing the third image, the relative pose information of the image capture device capturing the fourth image and the target object in the first time period.

For example, the obtaining relative pose information of the image capture device capturing the fourth image and the image capture device capturing the third image includes: initializing, based on configuration parameters such as an installation location and a pitch angle of the image capture device, the relative pose information of the image capture device capturing the fourth image and the image capture device capturing the third image; or in a scene of dynamically obtaining a panoramic video, if the image capture device capturing the fourth image has captured the calibration target in another historical time period, obtaining, based on a calibration result obtained when the calibration target is captured, the relative pose information of the image capture device capturing the fourth image and the image capture device capturing the third image.

Therefore, regardless of Case 1 or Case 2, the video stitching device can obtain the first calibration result based on the calibration target. The first calibration result includes the relative pose information of the plurality of image capture devices and the target object in the first time period, and the relative pose information indicates locations and postures of the plurality of image capture devices separately relative to the target object.

Optionally, the relative pose information may be represented as an extrinsic parameter matrix $\mathrm{T} = \begin{pmatrix} R & t \\ 0 & 1 \end{pmatrix}$. Herein, R is a rotation matrix and indicates a posture parameter of the image capture device; and t is a translation matrix and indicates a location parameter of the image capture device. An extrinsic parameter is an external parameter of the image capture device. The extrinsic parameter is determined by a spatial location of the image capture device and a pitch angle, a roll angle, a yaw angle, and another angle.

In a possible implementation, after the obtaining a first calibration result based on the calibration target, the method further includes: obtaining a pitch angle of the image capture device based on the rotation matrix in the extrinsic parameter matrix; and correcting the pitch angle of the image capture device based on an imaging location of the target object in the image. In this way, impact of the pitch angle during installation of the image capture device on an effect of the panoramic image can be avoided, so that a field of view of the image capture device changes with the target object, to cover the target object.

In this embodiment of this application, in a scene of dynamically obtaining a panoramic video, if relative locations of the image capture device and the target object change, to ensure a video stitching effect in a time period from a change in the relative locations to re-calibration completion, a change status of the relative locations of the image capture device and the target object may be queried by using the external sensor. If the image capture device translates relative to the target object, relative pose information of the image capture device and the target object after the change in the relative locations may be estimated based on a distance value of the translation. Therefore, stability of a stitching effect can be further improved, an image stitching error caused by untimely calibration can be avoided, and stability of the obtained panoramic image can be further improved.

Optionally, for example, the target object is a mine shearer. The image capture device is deployed on a support, and the support translates towards a direction of the coal wall along with coal mining working progress. The obtaining a first calibration result based on the calibration target includes: in response to motion of the support, obtaining a first forward slip amount and a first pillar height of the support before the motion, and a second forward slip amount and a second pillar height of the support after the motion; updating the extrinsic parameter matrix of the image capture device based on the first forward slip amount, the first pillar height, the second forward slip amount, and the second pillar height of the support; and determining the calibration result based on an updated extrinsic parameter matrix and the calibration target included in the plurality of first images.

For example, the first forward slip amount S1 and the first pillar height H1 of the support that are obtained when calibration is completed last time and the extrinsic parameter matrix $T = \begin{pmatrix} R & t \\ 0 & 1 \end{pmatrix}$ in the calibration result are recorded. Herein, $t = (tx; ty; tz)$, where $tx, ty, tz$ respectively indicate coordinate locations of the image capture device in an x-axis, a y-axis, and a z-axis. After the translation of the support is detected, the second forward slip amount S2 and the second pillar height H2 of the translated support are queried, and the translation matrix $t = (tx; ty + H2 - H1; tz + S2 - S1)$ in the extrinsic parameter matrix T is updated, to obtain an updated first calibration result.

In this embodiment of this application, for the third image in the plurality of first images, because the third image includes the target object, and fields of view of image capture devices capturing the third images differ greatly, a foreground area in which the target object of the third image is located and a background area other than an area in which the target object is located are not on a same stitching plane. In this case, before image stitching is performed, the foreground area of the third image is determined based on the first calibration result and configuration information. It may be understood that, after the foreground area of the third image is determined, an area other than the foreground area of the third image is the background area. In this way, the third images can be stitched on different planes based on the foreground area or the background area, so that the stitched panoramic image is more complete and accurate.

Optionally, before the plurality of first images are stitched, the configuration parameter required for image stitching needs to be obtained. For example, the configuration parameter includes but is not limited to at least one of size information of the target object, a quantity of calibration targets disposed on the target object, location information of the calibration target, and a type of the calibration target, and at least one of intrinsic parameters such as a focal length of the image capture device, a physical length of a pixel on a photographic plate, a field of view of a lens, and a distortion parameter. The intrinsic parameter is an internal parameter of the image capture device, and an intrinsic parameter of a same image capture device is unchanged.

When the configuration parameter is obtained, animation guidance may be added to dynamically display a three-dimensional model of the target object, to obtain the size information of the target object and the location information of the calibration target. The size information of the target object is calculated by using schematic diagrams of top view, side view, and front view models of the three-dimensional model of the target object, and the location information of the calibration target is calculated by using a coordinate location of a corner of the calibration target on the three-dimensional model of the target object. Optionally, accuracy of constructing the three-dimensional model of the target object is not limited in embodiments of this application.

For example, the target object is a mine shearer. It can be learned from FIG. 6 that a body structure of the mine shearer includes front and rear rollers and front and rear rocker arms, and a middle part is connected by using a connecting rod. FIG. 7 is a schematic diagram of a top view model of a mine shearer according to an embodiment of this application. As shown in FIG. 7, size information of a body of a mine shearer includes: A length of a level-1 body is 7500, a length of a level-2 body is 1500, a length of a level-3 body is 1000, a length of the rocker arm is 2000, and a diameter of the roller is 1800.

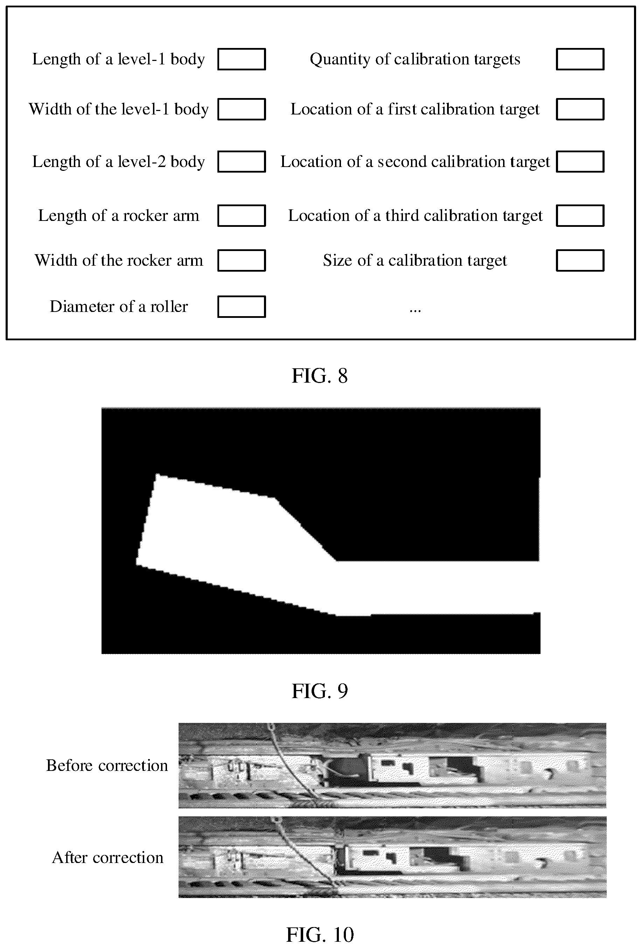

In a possible implementation, a corresponding user interface (user interface, UI) may be designed to facilitate a user to input the configuration parameter. For example, on a UI interface shown in FIG. 8, the UI interface includes parameter input locations such as the length of the level-1 body, a width of the level-1 body, the length of the level-2 body, the length of the rocker arm, a width of the rocker arm, the diameter of the roller, a quantity of calibration targets, a location of a first calibration target, a location of a second calibration target, a location of a third calibration target, and a size of a calibration target. The location of the calibration target is a coordinate location of the calibration target on a model coordinate system of the three-dimensional model. In this way, the video stitching device can obtain the configuration parameter based on an input result of the user on the UI interface, to perform image stitching based on the configuration parameter.

It should be noted that the configuration parameters shown in FIG. 8 are merely example descriptions provided in embodiments of this application. Optionally, the UI interface shown in FIG. 8 may further include parameter input locations such as a width of the level-2 body, a height of the level-1 body, and a height of the level-2 body. In other words, content of the obtained configuration parameter required for image stitching is not limited in embodiments of this application. In different target scenes, because target objects and stitching requirements are different, the content of the obtained configuration parameter is also different. For example, the content of the configuration parameter may further include information such as an installation location and a pitch angle of the image capture device.

The method provided in this embodiment of this application is conveniently applied to different target scenes. To be specific, for different target scenes, target objects and configuration parameters of the image capture device that correspond to the different target scenes are input on the UI interface, and the panoramic video may be obtained based on the input configuration parameters and according to the method provided in this embodiment of this application. This is not limited by a specific target scene and a feature of a specific target object, and has good popularization.

In a possible implementation, the stitching the plurality of first images based on the first calibration result and the configuration information, to obtain the first panoramic image of the target scene includes but is not limited to the following step 5021 to step 5023.

Step 5021: Determine the foreground area of the third image based on the first calibration result and the configuration information.

In a possible implementation, the determining the foreground area of the third image based on the first calibration result and the configuration information includes: obtaining, based on the first calibration result, a projection transformation relationship corresponding to the third image; obtaining, based on the configuration parameter, coordinate locations that are of a plurality of boundary points on an outer contour of the target object and that are on the three-dimensional model of the target object; projecting, based on the projection transformation relationship, the coordinate locations on the three-dimensional model onto a pixel coordinate system corresponding to the third image, to obtain a projection result; and obtaining a segmentation mask of the target object in the third image based on the projection result.

In this way, the segmentation mask of the target object in the third image is obtained in a projection manner based on the first calibration result and the configuration parameters such as the size information of the target object and the location information of the calibration target, so that the obtained segmentation mask is more accurate, and then the more accurate foreground area can be obtained based on the segmentation mask.

In this embodiment of this application, the projection transformation relationship corresponding to the third image indicates a projection relationship between the model coordinate system of the three-dimensional model of the target object and the pixel coordinate system of the third image. The pixel coordinate system is a two-dimensional coordinate system including pixels, and is used to describe a location of a pixel in the image. The projection transformation relationship is a product of an intrinsic parameter matrix and an extrinsic parameter matrix. The intrinsic parameter matrix is determined by using an intrinsic parameter of an image capture device, and can be obtained by using the known configuration parameter. For example, the projection transformation relationship may be represented in a form of a matrix. For example, the projection transformation relationship may be represented as: $[pu, pv]^T = K_i T_i P_3$. Herein, $K_i$ indicates an intrinsic parameter matrix of an image capture device capturing an $i^{th}$ third image, $T_i$ indicates an extrinsic pa-

rameter matrix of the image capture device capturing the $i^{th}$ third image, $P_3$ is a spatial coordinate location of a point on the target object, and pu and pv are respectively pixel coordinate locations of the point on projection horizontal and vertical axes of the image capture device capturing the $i^{th}$ third image.

Therefore, the corresponding projection transformation relationship can be obtained based on the extrinsic parameter matrix in the first calibration result and the intrinsic parameter matrix of the image capture device, and any point on the model coordinate system of the three-dimensional model of the target object can be projected onto pixel coordinates of a corresponding image by using the projection transformation relationship.

Optionally, the size information of the target object and the location information of the calibration target may be obtained from the configuration parameter. Further, the coordinate locations that are of the plurality of boundary points on the outer contour of the target object and that are on the three-dimensional model of the target object are obtained based on a coordinate location of the calibration target on the three-dimensional model of the target object and the size information of the target object. For example, it is assumed that the coordinate location of the calibration target on the three-dimensional model of the target object is P (1000, 0, 0), and a distance that is between a boundary point of the target object and the calibration target and that is obtained based on the size information of the target object is L (1000, 500, 500). In this case, a coordinate location of the boundary point on the three-dimensional model of the target object is P+L=(2000, 500, 500).

In this embodiment of this application, after the coordinate locations of the plurality of boundary points on the three-dimensional model of the target object are obtained, the coordinate locations of the plurality of boundary points on the three-dimensional model of the target object are projected, based on the projection transformation relationship corresponding to each third image, onto the pixel coordinate system corresponding to the third image, to obtain a plurality of projected points on the pixel coordinate system. Then, an external polygon is obtained by solving coordinates of all the projected points, to obtain the projection result, and the segmentation mask of the target object in each third image is obtained based on the projection result. It may be understood that segmentation masks of the target object in the third images are different, and a complete segmentation mask of the target object can be obtained by stitching the segmentation masks of the target object in the third images.

In a possible implementation, a process of obtaining the complete segmentation mask of the target object is: for the segmentation mask of the target object in each third image, stitching the segmentation masks of the target object in the third images based on the background area of each third image, to obtain a first stitching mask; stitching the segmentation masks in the third images based on the foreground area of each third image, to obtain a second stitching mask; and aligning and fusing the first stitching mask and the second stitching mask, to obtain the complete segmentation mask of the target object.

For example, the target object is a mine shearer. Several boundary points are selected on the outer contour of the mine shearer, and coordinate locations of the several boundary points on the three-dimensional coordinate system of the mine shearer are projected onto the pixel coordinate system of the third image based on the projection transformation relationship of the third image. An external polygon is obtained by solving coordinates of all the projected points, and smoothing processing is performed on the obtained external polygon, to obtain the segmentation mask of the mine shearer on the image capture device capturing the third image. For example, FIG. 9 is a schematic diagram of a segmentation mask of a mine shearer according to an embodiment of this application.

It may be understood that, in a scene of dynamically obtaining a panoramic video, if the size information of the target object changes, a change status of the target object may be queried in real time, to update the size information of the target object in real time, so that positioning accuracy of the segmentation mask is further improved. For example, in a scene of obtaining a panoramic video of a coal mining working face, because the roller of the mine shearer moves around a rotating shaft in a working process of the mine shearer, spatial coordinates of the roller and the rocker arm may be recalculated based on a real-time queried running angle value of the rocker arm, and the segmentation mask is re-obtained based on the recalculated spatial coordinates.

In a possible implementation, an example in which the target object is the mine shearer is used; and the obtaining, based on the configuration parameter, coordinate locations that are of a plurality of boundary points on an outer contour of the target object and that are on a three-dimensional model of the target object includes: obtaining a running angle of the rocker arm of the mine shearer; and obtaining, based on the running angle and the configuration information, the coordinate locations that are of the plurality of boundary points on the outer contour of the target object and that are on the three-dimensional model of the target object.

After the segmentation mask corresponding to each third image is obtained, the foreground area of each third image may be determined based on the segmentation mask corresponding to each third image, and then the background area of each third image may also be obtained based on the determined foreground area of each third image.

Step 5022: Stitch the at least two third images based on the foreground area of the third image, to obtain a stitched image including the target object.

After the foreground area and the background area of each third image are determined, to avoid impact of accuracy and stability of matching of feature points, in this embodiment of this application, the at least two third images are stitched with reference to the first calibration result, and the images are stitched by using the determined foreground area of the third image. This ensures content integrity of the foreground area in the panoramic image obtained through stitching, and avoids content loss or repetition of the foreground area.

In a possible implementation, after the foreground area of the third image is determined, the stitching the third images based on the foreground area of the third image, to obtain the stitched image including the target object includes but is not limited to the following two manners. In this case, the stitched image including the target object may be obtained through stitching in different manners, so that flexibility of obtaining the panoramic image is higher.

Manner 1: Stitch the third images based on the foreground area of each third image, to obtain the stitched image including the target object.

In a possible implementation, the stitching the third images based on the foreground area of each third image, to obtain the stitched image including the target object includes: for any two adjacent third images, determining a reference area on the three-dimensional model of the target object based on foreground areas of the any two third images and the first calibration result, and determining a foreground stitching location on the reference area, where both the any two third images includes the reference area; projecting the foreground stitching location onto the any two third images based on the projection transformation relationship, to obtain foreground stitching lines on the any two third images; and stitching the any two third images based on the foreground stitching lines, to obtain the stitched image including the target object.

A manner of selecting the stitching location is not limited in embodiments of this application. For example, the target object is a mine shearer. The stitching location may be a top surface of the mine shearer, or may be a side surface of the mine shearer, or may be a central line of an overlapping body plane. In a possible implementation, the stitching the any two third images based on the foreground stitching lines includes: for the any two third images, combining content on the left of the foreground stitching line in the left third image with content on the right of the foreground stitching line in the right third image.

In this embodiment of this application, for the any two adjacent third images, the reference area on which the target object simultaneously appears on the three-dimensional model in the any two third images can be determined based on the projection result that is of the target object on the any two third images and that is obtained based on the first calibration result, and one foreground stitching location is selected from the reference area on the three-dimensional model. The foreground stitching location is projected from the three-dimensional model onto the any two third images, to obtain two foreground stitching lines, and the any two third images are stitched based on the foreground stitching lines, to obtain a stitched image of the any two third images. Stitched images of every any two third images are stitched, to obtain the entire stitched image including the target object.

In this way, the foreground stitching location is selected on the three-dimensional model of the target object, and then the foreground stitching location is projected onto a corresponding third image, to obtain the foreground stitching lines on the third image. Stitching is performed based on the foreground stitching line on each third image, to implement image stitching based on a foreground plane. This ensures integrity of the target object in the panoramic image.

It may be understood that, in a scene of dynamically obtaining a panoramic video, the video stitching device performs stitching by time periods based on a time sequence of capturing images by the image capture devices, and then obtains the panoramic video based on a panoramic image obtained through stitching by time periods. In this way, if a location of the target object in the target scene changes, the reference area of the target object needs to be calculated by time periods, and different foreground stitching lines are obtained through consecutive projection, to ensure accuracy of the foreground stitching lines obtained when images in each time period are stitched.

Optionally, in addition to the foregoing manner of obtaining the foreground stitching line through calculation by time periods, in this embodiment of this application, based on a correspondence between a movement speed of the foreground stitching location on the three-dimensional model of the target object and a motion speed of the target object, a movement speed of the corresponding foreground stitching location on the three-dimensional model of the target object may be further obtained based on the motion speed of the current target object after the foreground stitching location is obtained in the first time period. A foreground stitching location in a next time period is obtained by smoothly moving the foreground stitching location on the three-dimensional model of the target object.

For example, the movement speed of the foreground stitching location on the three-dimensional model of the target object is positively correlated with the motion speed of the target object. The target object runs for a specific distance at a motion speed in a time period, and the foreground stitching location moves for a specific distance on the target object at a movement speed in the time period.

In a possible implementation, the target object moves in the target scene. After the determining a foreground stitching location on the reference area, the method further includes: obtaining the correspondence between the motion speed of the target object and the movement speed of the stitching location; and determining, based on the correspondence, the foreground stitching location on the three-dimensional model of the target object in a second time period. In this way, the foreground stitching location on the three-dimensional model of the target object in the next period is determined based on the correspondence between the motion speed of the target object and the movement speed of the stitching location. This improves efficiency of obtaining the foreground stitching location on the three-dimensional model of the target object in the second period, and can ensure that the stitching location changes smoothly without a sudden change, so that quality of the panoramic image obtained through stitching is further ensured.

In this embodiment of this application, after the stitching the third images based on the foreground area of each third image, to obtain the stitched image including the target object, the method further includes: performing front-view correction on the obtained stitched image including the target object, to obtain the stitched image including a front view of the target object. A front-view correction manner is not limited in embodiments of this application, provided that the target object included in the stitched image is a front-view effect of the target object.

In a possible implementation, after the obtaining the stitched image including the target object, the method further includes: selecting a plurality of points on a horizontal central axis of the target object, and obtaining, based on the projection transformation relationship, a plurality of projected points corresponding to the plurality of points on the stitched image including the target object; and performing, based on a horizontal ratio of different intervals between the plurality of projected points, scaling transformation on the stitched image including the target object, to obtain the stitched image including the target object. A stitched image that includes the target object and on which intervals between the plurality of projected points are equal is the stitched image including the front view of the target object. For example, the plurality of points are selected at equal intervals on the horizontal central axis of the target object, and scaling transformation is performed on the stitched image based on the projected points corresponding to the plurality of points on the stitched image, to enable intervals between the plurality of projected points on the stitched image including the target object to be equal.

In this embodiment of this application, front-view correction is performed on the obtained stitched image including the target object, so that a structure ratio of the target object in the panoramic image obtained through stitching does not continuously change with an observation angle of view, and a viewing effect is not affected. For example, the target object is a mine shearer. FIG. 10 is a comparison diagram of front-view correction according to an embodiment of this application. It can be learned from FIG. 10 that a horizontal lengthened effect of a mine shearer structure appears in the stitched image before correction, and a structure ratio of the mine shearer structure is well maintained in the stitched image after correction. In addition, the panoramic image is obtained in a projection manner. Because a spatial location of the target object and an imaging location of the target object on the image are completely known, close-ups can be switched freely and accurately.

Manner 2: Stitch the third images to obtain a first stitched image; stitch foreground areas of the third images to obtain a second stitched image; and fuse the first stitched image and the second stitched image to obtain the stitched image including the target object.

In Manner 2, the first stitched image obtained by directly stitching the third images and the second stitched image obtained by stitching the foreground areas of the third images are separately obtained, to implement image stitching on two different depth planes. Then, the first stitched image and the second stitched image are fused to obtain the final stitched image including the target object. In this way, a problem that foreground and background stitching planes are different due to a large parallax between the image capture devices is resolved, and the foreground area obtained through stitching is more complete.

In a possible implementation, the stitching the third images to obtain a first stitched image includes: for the any two adjacent third images, determining, based on the first calibration result, an overlapping field of view of image capture devices corresponding to the any two third images in the target scene, and selecting a background stitching location within the overlapping field of view; projecting the background stitching location onto the any two third images based on the projection transformation relationship, to obtain background stitching lines on the any two third images; and stitching the any two third images based on the background stitching lines, to obtain the first stitched image.

A manner of selecting the background stitching line is not limited in embodiments of this application. For example, a central line of the overlapping field of view is used as the stitching line, or a boundary line of the overlapping field of view is used as the stitching line. Optionally, the stitching the any two third images based on the background stitching lines includes: for the any two third images, combining content on the left of the background stitching line in the left third image with content on the right of the background stitching line in the right third image.

In this embodiment of this application, the overlapping field of view of the image capture devices corresponding to the any two third images in the target scene is determined. In other words, the overlapping field of view that is of the image capture devices corresponding to the any two third images and that is on the background area of the target scene is determined. For example, in the target scene of obtaining the panoramic image of the mine shearer in the coal mining tunnel, the background area of the target scene is a coal wall. It can be learned from the schematic diagram of the working scale shown in FIG. 2 that fields of view of adjacent cameras overlap on a plane of the coal wall.

In a possible implementation, in Manner 2, a manner of stitching the foreground areas of the third images to obtain the second stitched image may be the same as the manner of stitching the third images based on the foreground area of each third image to obtain the stitched image including the target object in Manner 1. That is, the obtained second stitched image is a stitched image including a foreground and a background.

In another possible implementation, in Manner 2, the stitching foreground areas of the third images to obtain a second stitched image includes: for any two adjacent third images, determining a reference area on the three-dimensional model of the target object based on foreground areas of the any two third images and the first calibration result, and determining a foreground stitching location on the reference area, where both the any two third images include the reference area; projecting the foreground stitching location onto the foreground areas of the any two third images based on the projection transformation relationship, to obtain foreground stitching lines on the foreground areas of the any two third images; and stitching the foreground areas of the any two third images based on the foreground stitching lines, to obtain the second stitched image including the target object. That is, the obtained second stitched image is a stitched image including only a foreground.

In this embodiment of this application, because the first stitched image is the stitched image that includes the foreground and the background and that is obtained based on the overlapping field of view, regardless of whether the second stitched image is the stitched image including the foreground and the background or the stitched image including only the foreground, after the first stitched image and the second stitched image are obtained, the first stitched image and the second stitched image are fused to obtain the more accurate stitched image including the target object.

In a possible implementation, the fusing the first stitched image and the second stitched image to obtain the stitched image including the target object includes: aligning a target location in the first stitched image with that in the second stitched image, to obtain an aligned first stitched image and an aligned second stitched image; obtaining, based on the calibration result, segmentation masks of the target object that correspond to at least two third images; and fusing the aligned first stitched image and the aligned second stitched image based on the segmentation masks of the target object, to obtain the stitched image including the target object. The stitched image including the target object and a stitched image that does not include the target object are separately obtained, and both the stitched images are stitched to obtain the first panoramic image of the target object. In this way, the first panoramic image is more accurate, and stitching efficiency is improved.

Selection of the target location is not limited in embodiments of this application, and may be flexibly adjusted based on an application scenario. For example, the aligning a target location in the first stitched image with that in the second stitched image includes: aligning the first stitched image with the second stitched image based on an object corresponding to the target location. For example, the target object is the mine shearer. The object corresponding to the target location may be the roller of the mine shearer. In this case, aligning the first stitched image with the second stitched image based on the object corresponding to the target location is aligning the first stitched image with the second stitched image based on the roller of the mine shearer. In addition, when alignment is performed based on the object corresponding to the target location, alignment may be performed based on location coordinates of the object and a size of the object. Optionally, the aligning a target location in the first stitched image with that in the second stitched image includes: aligning the first stitched image with the second stitched image based on the location coordinates of the object corresponding to the target locations and the size of the object. For example, the first stitched image is aligned with the second stitched image based on the roller of the mine shearer means that the first stitched image is aligned with the second stitched image based on location coordinates of the roller of the mine shearer and a size of the roller.

Optionally, the fusing the aligned first stitched image and the aligned second stitched image based on the segmentation masks of the target object includes: obtaining a complete segmentation mask of the target object based on the segmentation masks of the target object that correspond to the at least two third images; aligning the complete segmentation mask of the target object with the aligned first stitched image and the aligned second stitched image, to obtain an aligned segmentation mask; and fusing the aligned first stitched image and the aligned second stitched image based on the aligned segmentation mask of the target object.

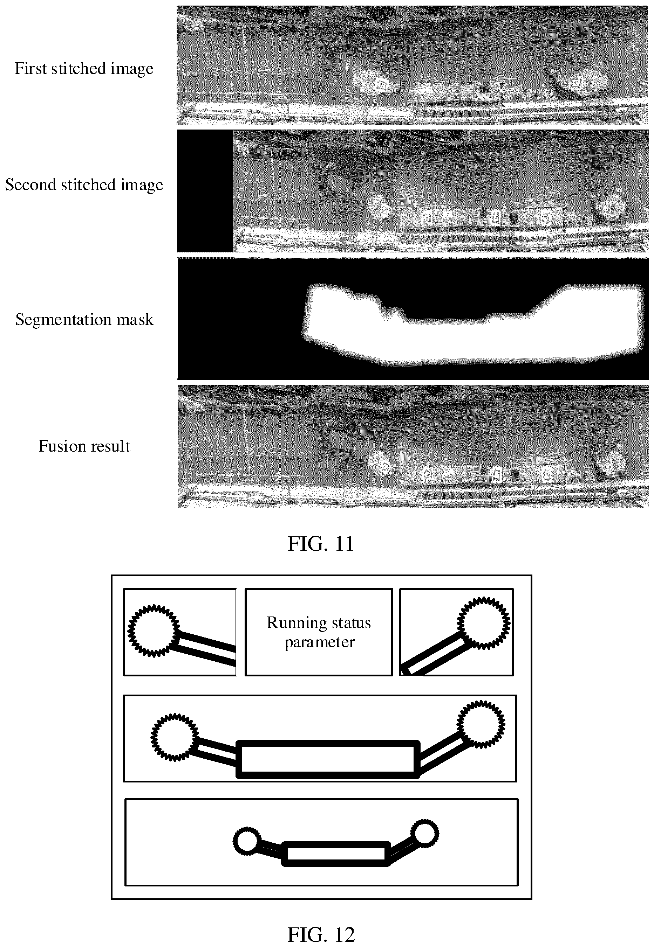

For example, the target object is the mine shearer, and the target location is a roller location of the mine shearer. Projection coordinates that are of left and right roller ends of the mine shearer and that are on the first stitched image, the second stitched image, and the segmentation mask are obtained based on the projection transformation relationship, and roller locations in the first stitched image, the second stitched image, and the segmentation mask are aligned before fusion. A smooth and complete segmentation mask of the mine shearer is used as a fusion weight, and weighted fusion is performed on the first stitched image and the second stitched image. Then, a stitched image obtained through fusion is the stitched image including the target object. FIG. 11 is a schematic diagram of fusing a first stitched image and a second stitched image according to an embodiment of this application.

Optionally, in Manner 2, to prevent the structure ratio of the target object in the stitched panoramic image from continuously changing with the observation field of view and affecting a viewing effect, similarly, front-view correction may be performed on the target object according to the front-view correction method in Manner 1. Optionally, front-view correction may be performed on the target object in the second stitched image after the second stitched image is obtained, or front-view correction may be directly performed on the target object in the fused stitched image.

In a possible implementation, in a scene of obtaining a panoramic video of the coal mining working face, when an obstacle like an inspector appears in the coal mining tunnel, because the obstacle blocks a part of the mine shearer, if the first stitched image including the obstacle and the second stitched image are fused, a phenomenon in which the obstacle is truncated occurs. If the obstacle is the inspector, a video image in which the inspector is truncated severely affects viewing experience. Therefore, detection may be performed on the obstacle in the third image, and an image stitching manner in each time period is adaptively determined based on whether the obstacle is included in a detection result.

Optionally, the stitching the third images based on the foreground area of each third image, to obtain the stitched image including the target object in Manner 1 includes: when at least one third image includes the obstacle, stitching the third images based on the foreground area of each third image, to obtain the stitched image including the target object. To be specific, if the obstacle is detected in one of the at least two third images, the third images are stitched based on the foreground area of each third image, to obtain the stitched image including the target object.

The stitching the third images to obtain the first stitched image; stitching the foreground areas of the third images to obtain the second stitched image; and fusing the first stitched image and the second stitched image to obtain the stitched image including the target object in Manner 2 includes: when the third image does not include the obstacle, stitching the third images to obtain the first stitched image; stitching the foreground areas of the third images to obtain the second stitched image; and fusing the first stitched image and the second stitched image to obtain the stitched image including the target object.

Step 5023: Obtain the first panoramic image of the target scene based on the stitched image including the target object.

It can be learned from analysis in step 502a that there are two cases for a quantity of third images included in the plurality of first images. One case is that a quantity of third images is the same as a quantity of first images. The other case is that a quantity of third images is less than a quantity of first images. For the two different cases, there are also two corresponding cases in a manner of obtaining the panoramic image of the target scene based on the stitched image including the target object.

In Case 1, because a quantity of third images is the same as a quantity of first images, all the plurality of first images are the third images including the target object. In this case, the obtained stitched image including the target object is a stitched image of the plurality of first images. In other words, the stitched image that includes the target object and that is obtained in step 5022 is the panoramic image of the target scene.

In Case 2, because a quantity of third images is less than a quantity of first images, in addition to the third images including the target object, the plurality of first images further include fourth images that do not include the target object. In this case, the stitched image that includes the target object and that is obtained in step 5022 is only a part of the stitched image of the target scene. The fourth images in the plurality of first images need to be stitched into the stitched image including the target object, to obtain the panoramic image of the target scene.

In a possible implementation, the obtaining the first panoramic image of the target scene based on the stitched image including the target object includes: stitching fourth images that do not include the target object in the plurality of first images, to obtain a stitched image that does not include the target object; and stitching the stitched image that does not include the target object and the stitched image including the target object, to obtain the first panoramic image of the target scene. The stitched image including the target object and the stitched image that does not include the target object are separately obtained, and both the stitched images are stitched to obtain the first panoramic image of the target object. In this way, the first panoramic image is more accurate, and stitching efficiency is improved.

Optionally, a manner of stitching the fourth images that do not include the target object in the plurality of first images to obtain the stitched image that does not include the target object is the same as the manner of stitching the third images to obtain the first stitched image in Manner 2.

In this case, the first panoramic image of the plurality of first images is obtained based on the foreground areas by performing step 5021 to step 5023. In this way, a stitching effect of the foreground areas in the first panoramic image can be more complete and accurate. In addition, dependency on registration of feature points is avoided, and therefore impact of noise such as smoke and light on the feature points in images is avoided, so that better stability and higher accuracy can be achieved.

In this embodiment of this application, in addition to obtaining the first panoramic image by performing step 5021 to step 5023, the plurality of first images may alternatively be directly stitched based on the first calibration result, the third image in the plurality of first images does not need to be determined, and the foreground area in the third image also does not need to be determined. Because stitching is performed directly based on the calibration result, dependency on registration of the feature points can also be avoided, and therefore impact of noise such as smoke and light on the feature points in the images can be avoided, so that better stability and higher accuracy can be achieved.

In a possible implementation, the stitching the plurality of first images based on the first calibration result, to obtain the first panoramic image of the target scene includes: for any two adjacent first images, determining, based on the first calibration result, an overlapping field of view of image capture devices corresponding to the any two first images in the target scene, and selecting a background stitching location within the overlapping field of view; projecting the background stitching location onto the any two first images based on the projection transformation relationship, to obtain background stitching lines on the any two first images; and stitching the any two first images based on the background stitching lines, to obtain the first panoramic image of the target scene.

A manner of selecting the background stitching line is not limited in embodiments of this application. For example, a central line of the overlapping field of view is used as the stitching line, or a boundary line of the overlapping field of view is used as the stitching line. Optionally, the stitching the any two first images based on the background stitching lines includes: for the any two first images, combining content on the left of the background stitching line in the left first image with content on the right of the background stitching line in the right first image.

In addition, after obtaining the first panoramic image, the video stitching device sends the obtained first panoramic image to a display device, and the display device displays the first panoramic image. The display device may be a mobile device like a mobile phone, a computer display, a large screen, or the like. Because an imaging area of the target object in the panoramic image is completely known, the panoramic image can be conveniently cropped for selecting a finally display area, so that different close-up images are displayed in a customized manner based on user requirements.

For example, a panoramic video of a coal mining working face is dynamically obtained. FIG. 12 is a schematic diagram of a display interface of a panoramic video according to an embodiment of this application. A panoramic image of the entire coal mining tunnel is displayed in a display area at a bottom layer, a complete close-up image of the mine shearer is displayed in a display area at a middle layer, and several local close-up images of the mine shearer and a running status parameter of a coal mining system are displayed in a display area at a top layer. In this way, images in the panoramic video can be automatically switched with running of the mine shearer, so that a coal mining worker can conveniently and efficiently monitor a running status of the coal mining system, and work efficiency and safety of coal mining is improved.

Step 503a: Obtain a plurality of to-be-stitched second images.

The plurality of second images are obtained by the plurality of image capture devices by performing image capture on the target scene in the second time period. One second image corresponds to one image capture device. In other words, the plurality of second images are in a one-to-one correspondence with the plurality of image capture devices. The first time period and the second time period are two adjacent time periods. Optionally, from the first time period to the second time period, a location of the target object changes in the target scene, or locations of the plurality of image capture devices change, or a location of the target object and locations of the plurality of image capture devices all change.

The first image and the second image that are captured by a same image capture device are directly adjacent frames. A person of ordinary skill in the art may understand that the first time period and the second time period may alternatively be two indirectly adjacent time periods. For example, the first time period is an $i^{th}$ image capture period or exposure time period of an image capture device, and the second time period is an $(i+n)^{th}$ image capture period or exposure time period of the image capture device. Both i and n are integers, and n may be a preset threshold, for example, 1, 2, 3, 4, 5, or .... When n is equal to 1, the two time periods are directly adjacent. When n is greater than 1, the two time periods are indirectly adjacent. In this case, the first image and the second image that are captured by the same image capture device are indirectly adjacent frames. That is, the image capture device further captures another frame between the first image and the second image.

In a possible implementation, for an implementation of step 503a, refer to related descriptions of step 501a. Details are not described herein again.

Step 504a: Stitch the plurality of second images based on the calibration target, to obtain a second panoramic image of the target scene.

Because relative locations of the plurality of image capture devices and the target object in the second time period are different from relative locations of the plurality of image capture devices and the target object in the first time period, a second calibration result is also different from the first calibration result. To be specific, in this embodiment of this application, a calibration result in a time period can be obtained in real time based on relative locations of the plurality of image capture devices and the target object in different time periods, to ensure accuracy of a calibration result used for image stitching in each time period.

For example, the panoramic video of the coal mining working face is dynamically obtained. In a coal mining working process, the mine shearer and the support on which a camera is deployed continuously move, and the calibration target moves along with the mine shearer. In other words, locations of the camera and the mine shearer and a distance between the camera and the coal wall all continuously change. In this case, dynamic calibration needs to be performed on the calibration target in the image, to track, in real time, a location change of the camera relative to the mine shearer, and continuously update, based on the location change of the camera relative to the mine shearer, a parameter like the calibration result required for image stitching.

Because the second calibration result is different from the first calibration result, the second panoramic image of the target scene obtained by stitching the plurality of second images based on the second calibration result is also different from the first panoramic image of the target scene obtained by stitching the plurality of first images based on the first calibration result. In this way, a location change of the target object in the target scene can be clearly observed by using the first panoramic image and the second panoramic image.

In a possible implementation, for an implementation of step 504a, refer to related descriptions of step 502a. Details are not described herein again.

It should be noted that the plurality of image capture devices for capturing the second images are the same as the plurality of image capture devices for capturing the first images. Optionally, the plurality of image capture devices for capturing the second images are different from the plurality of image capture devices for capturing the first images. For example, five image capture devices are deployed in the target scene, image capture devices for capturing the first images are a first image capture device, a second image capture device, and a third image capture device, and image capture devices for capturing the second images are the second image capture device, the third image capture device, a fourth image capture device, and a fifth image capture device. A manner of stitching the images captured by the first, second, and third image capture devices is the same as a manner of stitching the images captured by the second, third, fourth, and fifth image capture devices. For the manner, refer to the related descriptions of step 502a. Details are not described herein again.

Step 505a: Obtain a panoramic video, where the panoramic video includes the first panoramic image and the second panoramic image.

A location of the target object in the second panoramic image is different from that in the first panoramic image. The panoramic video may be obtained by stitching the first panoramic image corresponding to the first time period and the second panoramic image corresponding to the first time period. The difference between the location of the target object in the second panoramic image and the location of the target object in the first panoramic image is essentially because relative locations of the image capture devices and the target object change. A location of the target object in a world coordinate system may change, or locations of the image capture devices in a world coordinate system may change.

According to the method for obtaining a panoramic video provided in this embodiment of this application, image stitching is performed based on the calibration target on the target object. In this case, a stitching process does not depend on matching of feature points in images, and therefore is not affected by noise such as smoke and light on the feature points in the images. In this way, the obtained panoramic image is more stable and more accurate, and further a panoramic video formed by a plurality of panoramic images is more accurate. In addition, after relative locations of the plurality of image capture devices and the target object change, the calibration result is obtained again. In this way, the obtained panoramic image is more accurate. Further, a plurality of panoramic images may form the panoramic video. According to a method for obtaining a panoramic image provided in an embodiment of this application, the panoramic video with higher accuracy may be obtained.

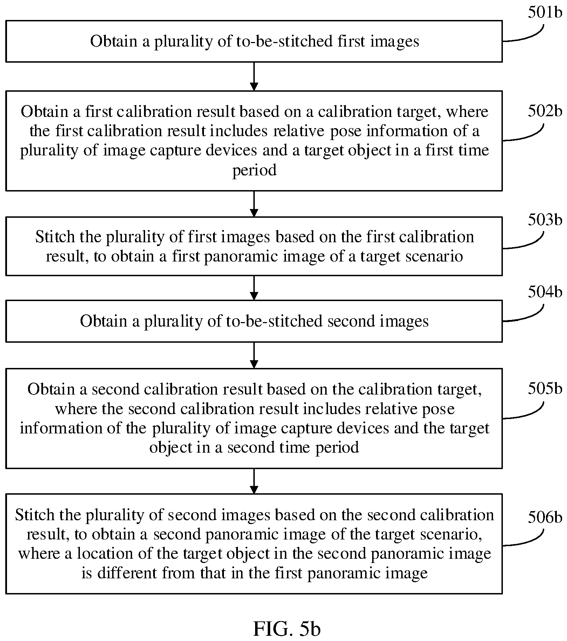

FIG. 5b is a flowchart of a method for obtaining a panoramic image according to an embodiment of this application. The method for obtaining a panoramic image is applicable to the system shown in FIG. 4. The method for obtaining a panoramic image provided in this embodiment of this application is described below by using an example in which an image stitching device performs the method. As shown in FIG. 5b, the method for obtaining a panoramic image provided in this embodiment of this application includes the following step 501b to step 506b.

Step 501b: Obtain a plurality of to-be-stitched first images.

Step 502b: Obtain a first calibration result based on a calibration target, where the first calibration result includes relative pose information of a plurality of image capture devices and a target object in a first time period.

Step 503b: Stitch the plurality of first images based on the first calibration result, to obtain a first panoramic image of a target scene.

Step 504b: Obtain a plurality of to-be-stitched second images.

Step 505b: Obtain a second calibration result based on the calibration target, where the second calibration result includes relative pose information of the plurality of image capture devices and the target object in a second time period.

Step 506b: Stitch the plurality of second images based on the second calibration result, to obtain a second panoramic image of the target scene, where a location of the target object in the second panoramic image is different from that in the first panoramic image.

For implementations of step 501b to step 506b, refer to related descriptions of step 501a to step 505a. Details are not described herein again.

FIG. 5c is a flowchart of another method for obtaining a panoramic video according to an embodiment of this application. The method for obtaining a panoramic video is applicable to the system shown in FIG. 4. The method for obtaining a panoramic video provided in this embodiment of this application is described below by using an example in which a video stitching device performs the method. As shown in FIG. 5c, the method for obtaining a panoramic video provided in this embodiment of this application includes the following step 501c to step 505c.

Step 501c: Obtain a plurality of to-be-stitched first images.

Step 502c: Stitch the plurality of first images based on a configuration parameter and a calibration target, to obtain a first panoramic image of a target scene.

Step 503c: Obtain a plurality of to-be-stitched second images.

Step 504c: Stitch the plurality of second images based on the configuration parameter and the calibration target, to obtain a second panoramic image of the target scene.

Step 505c: Obtain a panoramic video, where the panoramic video includes the first panoramic image and the second panoramic image.

For implementations of step 501c to step 505c, refer to related descriptions of step 501a to step 505a. Details are not described herein again.

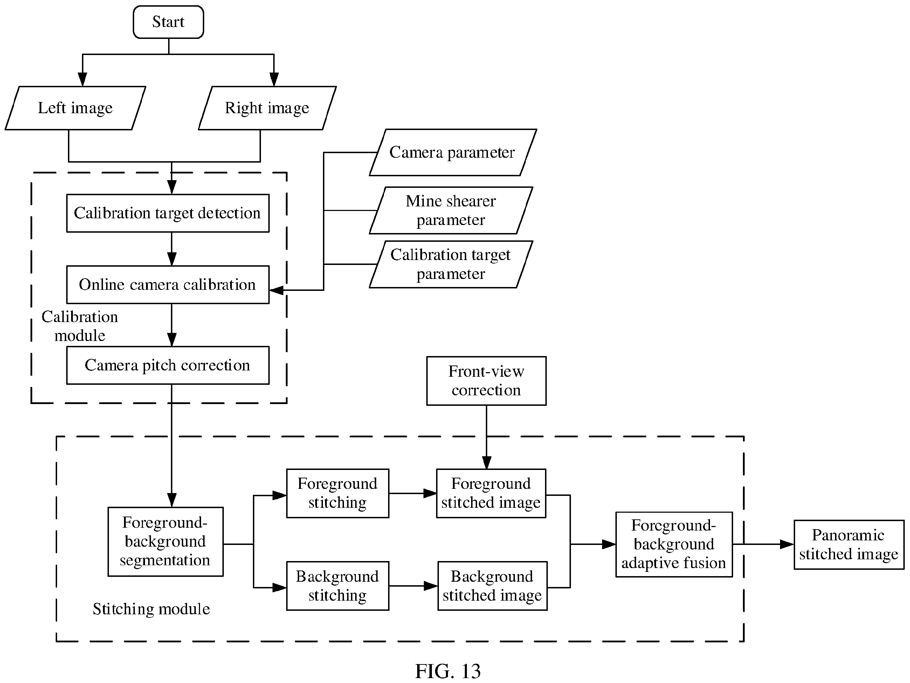

Next, to describe the method for obtaining a panoramic video obtaining provided in this embodiment of this application more clearly, an example in which the target scene is a fully mechanized coal mining face on which the mine shearer is located, and the image capture device is a camera is used to describe image stitching performed on left and right images captured, in a first time period, by two adjacent cameras installed on supports of the coal mining tunnel. FIG. 13 is a schematic diagram of a structure of a system for stitching two images according to an embodiment of this application. As shown in FIG. 13, the system mainly includes a calibration module and a stitching module. A process in which the system performs image stitching includes but is not limited to the following 1301 to 1305.

1301: Input a left image and a right image into the calibration module.

The left image and the right image are captured by two adjacent cameras in a same time period, and both the left image and the right image include a target object.

1302: Input configuration parameters such as a camera parameter, a mine shearer parameter, and a calibration target parameter into the calibration module.

The camera parameter includes a camera intrinsic parameter, an interval between cameras deployed on the supports, a camera installation angle, and the like. The mine shearer parameter includes size information, a roller angle, a running speed, and the like of the mine shearer. The calibration target parameter includes a quantity and serial numbers of calibration targets, a deployment location of a calibration target, a type of the calibration target, and the like. Optionally, features between a plurality of calibration targets are distinguishable.

Content of the configuration parameter is not limited in embodiments of this application. To be specific, the input configuration parameter may be an intrinsic parameter of any camera, size information of any mine shearer, and any calibration target. Therefore, the method may be applied to different coal mines, provided that the foregoing corresponding configuration parameters are input. The method is not limited by a coal mine scene, a mine shearer feature, and the like, and has good popularization.

1303: The calibration module separately performs online camera calibration on the left image and the right image, to obtain calibration results respectively corresponding to the left image and the right image.

Optionally, the calibration target is disposed on a body surface that is of the mine shearer and that is close to the camera, and detection is performed on a corner of the calibration target in the left image and the right image. After four or more corners are detected, camera calibration may be performed based on spatial location coordinates of the four or more corners. Optionally, online camera calibration is performed on the left image and the right image according to a Zhang Zhengyou calibration method, to obtain a relative pose relationship between the camera and the mine shearer, in other words, obtain the calibration results. Because the mine shearer continuously moves in a running process, poses of the camera and the mine shearer change. In this way, real-time online camera calibration is performed on an image captured by the camera at each moment, so that an accurate calibration result at any moment can be obtained in real time, to ensure accuracy of an image stitching effect.

In a possible implementation, after the calibration results are obtained, pitch correction may be further performed on the camera based on the calibration results. The calibration result can indicate an included angle relationship between a camera deployment location and a horizontal plane of the camera deployment location, namely, pitch angle information of camera installation. Therefore, if a pitch angle of the camera is inappropriate, for example, the pitch angle is extremely small or large, the camera cannot capture a panorama of the mine shearer. In this case, a pitch angle of the camera may be corrected by using the calibration result, so that the stitched video can cover a full view of the mine shearer.

1304: The stitching module performs image stitching based on the left image, the right image, and the corresponding calibration results.

In this embodiment of this application, projection transformation relationships respectively corresponding to the left image and the right image are obtained based on the calibration results respectively corresponding to the left image and the right image. In a camera imaging principle, the projection transformation relationship can be used to project location coordinates of any point in a three-dimensional coordinate system of the mine shearer onto a pixel coordinate system of a camera image.

In a possible implementation, foreground-background segmentation is performed on the left image and the right image based on the projection transformation relationships. Optionally, coordinate locations that are of several boundary points on an outer contour of the mine shearer and that are on the three-dimensional model of the mine shearer are obtained based on corner coordinates of the calibration target and the size information of the mine shearer. The coordinate locations of the several boundary points on the three-dimensional model of the mine shearer are projected onto a pixel coordinate system of the left image based on the projection transformation relationship of the left image, and an external polygon is obtained by solving pixel coordinates of all the projected points, to obtain a segmentation mask that is of the mine shearer and that corresponds to the left image. The coordinate locations of the several boundary points on the three-dimensional model of the mine shearer are projected onto a pixel coordinate system of the right image based on the projection transformation relationship of the right image, and the external polygon is obtained by solving the pixel coordinates of all projected points, to obtain a segmentation mask that is of the mine shearer and that corresponds to the right image. The left image is segmented into a foreground area and a background area based on the segmentation mask that is of the mine shearer and that corresponds to the left image, and the right image is segmented into a foreground area and a background area based on the segmentation mask that is of the mine shearer and that corresponds to the right image.

It may be understood that, because the segmentation mask is obtained based on the boundary points on the outer contour of the mine shearer, the foreground area obtained through segmentation is an area including the mine shearer, and the background area is an area that does not include the mine shearer. In other words, the background area is an area including a coal wall.

In this embodiment of this application, after the left image and the right image are separately segmented into the foreground area and the background area, video stitching based on the foreground areas may be implemented based on the foreground areas of the left image and the right image, and video stitching based on the background areas may be implemented based on the background areas of the left image and the right image. In this way, image stitching on different planes is implemented, and a problem that a parallax between the cameras is large is well resolved, so that the mine shearer in stitched images is more complete.

In a possible implementation, foreground stitching is performed on the left image and the right image based on the foreground areas of the left image and the right image, to obtain a foreground stitched image. Optionally, a reference area on the three-dimensional model of the mine shearer is determined based on the foreground areas of the left image and the right image and the corresponding calibration results, where the reference area is an area that appears on both the left image and the right image, and a foreground stitching location is determined on the reference area on the three-dimensional model. The foreground stitching location is projected onto the left image based on the projection transformation relationship of the left image, to obtain a foreground stitching line on the left image. The foreground stitching location is projected onto the right image based on the projection transformation relationship of the right image, to obtain a foreground stitching line on the right image. Content on the left of the foreground stitching line in the left image and content on the right of the foreground stitching line in the right image are stitched to obtain the foreground stitching image.

Optionally, after the foreground stitched image is obtained, front-view correction may be further performed on the foreground stitched image, so that a structure ratio of the mine shearer in the foreground stitched image remains stable, and a front-view effect of the mine shearer is maintained at all times.

In a possible implementation, background stitching is performed on the left image and the right image based on the background areas of the left image and the right image, to obtain a background stitched image. Optionally, an overlapping field of view that is of a left camera capturing the left image and a right camera capturing the right image and that is on a plane of the coal wall is determined based on the background areas of the left image and the right image and corresponding calibration results, and a background stitching location is determined within the overlapping field of view on the plane of the coal wall. The background stitching location is projected onto the left image based on the projection transformation relationship of the left image, to obtain a background stitching line on the left image. The background stitching location is projected onto a background image based on the projection transformation relationship of the right image, to obtain a background stitching line on the right image. Content on the left of the background stitching line in the left image and content on the right of the background stitching line in the right image are stitched to obtain the background stitching image.

After the foreground stitched image and the background stitched image are obtained, foreground-background adaptive fusion is performed on the foreground stitched image and the background stitched image, to obtain a panoramic stitched image. Optionally, the foreground stitched image may be directly used as the panoramic stitched image, or the background stitched image may be directly used as the panoramic stitched image, or an image obtained by fusing the foreground stitched image and the background stitched image may be used as the panoramic stitched image.

1305: Obtain the panoramic stitched image based on an output result of the stitching module.

After the panoramic stitched image is obtained, because an imaging location of the mine shearer in the panoramic stitched image is known, the panoramic stitched image may be cropped based on a requirement. In this embodiment of this application, the panoramic stitched image corresponding to the first time period may be obtained based on the output result of the stitching module by performing the foregoing 1301 to 1304. Similarly, for image stitching performed on the left and right images captured, in the second time period, by two adjacent cameras installed on the supports of the coal mining tunnel, a panoramic stitched image corresponding to the second time period may be obtained based on the output result of the stitching module by performing the foregoing 1301 to 1304. In this way, a panoramic video can be obtained by stitching the panoramic image corresponding to the first time period and the panoramic image corresponding to the second time period.

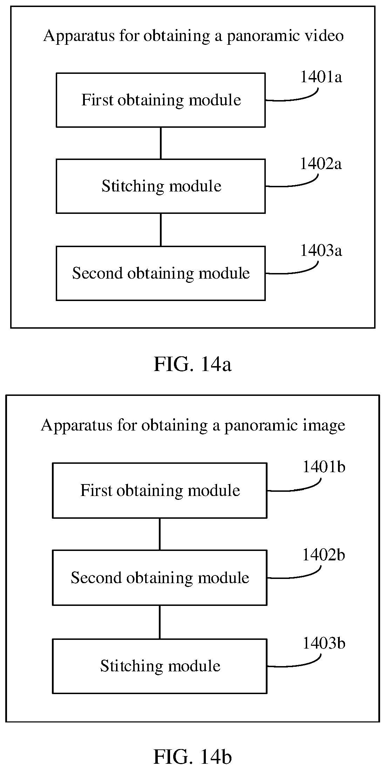

The foregoing describes the method for obtaining a panoramic video in embodiments of this application. An embodiment of this application further provides an apparatus for obtaining a panoramic video corresponding to the method. FIG. 14a is a schematic diagram of a structure of an apparatus for obtaining a panoramic video according to an embodiment of this application. The apparatus is used in a video stitching device. Based on the following plurality of modules shown in FIG. 14a, the apparatus for obtaining a panoramic video shown in FIG. 14a can perform all or some operations performed by a device for obtaining a panoramic video. It should be understood that the apparatus may include more additional modules than the shown modules or omit some of the shown modules. This is not limited in embodiments of this application. As shown in FIG. 14a, the apparatus includes:

a first obtaining module 1401a, configured to obtain a plurality of to-be-stitched first images, where the plurality of first images are obtained by a plurality of image capture devices by performing image capture on a target scene in a first time period, the plurality of first images are in a one-to-one correspondence with the plurality of image capture devices, fields of view of the plurality of image capture devices capturing images are different, the target scene includes a moving target object, and at least one calibration target is disposed on a side that is of the target object and that is close to the plurality of image capture devices;

a stitching module 1402a, configured to stitch the plurality of first images based on the calibration target, to obtain a first panoramic image of the target scene, where

the first obtaining module 1401a is further configured to obtain a plurality of to-be-stitched second images, where the plurality of second images are obtained by the plurality of image capture devices by performing image capture on the target scene in a second time period, and the plurality of second images are in a one-to-one correspondence with the plurality of image capture devices; and

the stitching module 1402a is further configured to stitch the plurality of second images based on the calibration target, to obtain a second panoramic image of the target scene; and

a second obtaining module 1403a, configured to obtain a panoramic video, where the panoramic video includes the first panoramic image and the second panoramic image, and a location of the target object in the second panoramic image is different from that in the first panoramic image.

In a possible implementation, the stitching module 1402a is configured to: stitch the plurality of first images based on a configuration parameter and the calibration target, to obtain the first panoramic image of the target scene; and stitch the plurality of second images based on the configuration parameter and the calibration target, to obtain the second panoramic image of the target scene. The configuration parameter includes at least one of size information of the target object, location information of the calibration target, and a type of the calibration target.

In a possible implementation, the target object is a mine shearer, and the target scene is a coal mining working face.

In a possible implementation, the stitching module 1402a is configured to: obtain a first calibration result based on the calibration target, where the first calibration result includes relative pose information of the plurality of image capture devices and the target object in the first time period; stitch the plurality of first images based on the first calibration result and the configuration parameter, to obtain the first panoramic image of the target scene; obtain a second calibration result based on the calibration target, where the second calibration result includes relative pose information of the plurality of image capture devices and the target object in the second time period; and stitch the plurality of second images based on the second calibration result and the configuration parameter, to obtain the second panoramic image of the target scene.

In a possible implementation, the plurality of first images include at least two third images, and each third image includes the target object. The stitching module 1402a is configured to: determine a foreground area of each third image based on the first calibration result and the configuration parameter, where the foreground area of each third image includes the target object; stitch the at least two third images based on the foreground area of each third image, to obtain a stitched image including the target object; and obtain the first panoramic image of the target scene based on the stitched image including the target object.

In a possible implementation, the stitching module 1402a is configured to: obtain, based on the first calibration result, a projection transformation relationship corresponding to the third image, where the projection transformation relationship indicates a projection relationship between a model coordinate system of a three-dimensional model of the target object and a pixel coordinate system of the third image; obtain, based on the configuration parameter, coordinate locations that are of a plurality of boundary points on an outer contour of the target object and that are on the three-dimensional model of the target object, where the configuration parameter includes the size information of the target object and the location information of the calibration target; project, based on the projection transformation relationship, the coordinate locations on the three-dimensional model onto the pixel coordinate system corresponding to the third image, to obtain a projection result; obtain a segmentation mask of the target object in the third image based on the projection result; and determine the foreground area of the third image based on the segmentation mask.

In a possible implementation, the stitching module 1402a is configured to: stitch the third images to obtain a first stitched image; stitch foreground areas of the third images to obtain a second stitched image; and fuse the first stitched image and the second stitched image to obtain the stitched image including the target object.

In a possible implementation, the stitching module 1402a is configured to: for any two adjacent third images, determine a reference area on the three-dimensional model of the target object based on foreground areas of the any two third images and the first calibration result, and determine a foreground stitching location on the reference area, where both the any two third images includes the reference area; project the foreground stitching location onto the any two third images based on the projection transformation relationship, to obtain foreground stitching lines on the any two third images; and stitch the any two third images based on the foreground stitching lines, to obtain the second stitched image.

In a possible implementation, the target object moves in the target scene. The stitching module 1402a is further configured to: obtain a correspondence between a motion speed of the target object and a movement speed of the stitching location; and determine, based on the correspondence, the foreground stitching location on the three-dimensional model of the target object in the second time period.

In a possible implementation, the stitching module 1402a is configured to: for the any two adjacent third images, determine, based on the first calibration result, an overlapping field of view of image capture devices corresponding to the any two third images in the target scene, and select a background stitching location within the overlapping field of view; project the background stitching location onto the any two third images based on the projection transformation relationship, to obtain background stitching lines on the any two third images; and stitch the any two third images based on the background stitching lines, to obtain the first stitched image.

In a possible implementation, the stitching module 1402a is configured to: align a target location in the first stitched image with that in the second stitched image, to obtain an aligned first stitched image and an aligned second stitched image; obtain, based on the first calibration result, segmentation masks of the target object that correspond to at least two third images; and fuse the aligned first stitched image and the aligned second stitched image based on the segmentation masks of the target object, to obtain the stitched image including the target object.

In a possible implementation, the stitching module 1402a is configured to: when at least one third image includes an obstacle, stitch the third images based on the foreground area of each third image, to obtain the stitched image including the target object.

In a possible implementation, the target object is the mine shearer. The stitching module 1402a is configured to: obtain a running angle of a rocker arm of the mine shearer; and obtain, based on the running angle and the configuration parameter, the coordinate locations that are of the plurality of boundary points on the outer contour of the target object and that are on the three-dimensional model of the target object.

In a possible implementation, the stitching module 1402a is further configured to: select a plurality of points at equal intervals on a horizontal central axis of the target object, and obtain, based on the projection transformation relationship, a plurality of projected points corresponding to the plurality of points on the stitched image including the target object; and perform, based on a horizontal ratio of intervals between the plurality of projected points, scaling transformation on the stitched image including the target object, to obtain the stitched image that includes the target object and on which intervals between the plurality of projected points are equal.

In a possible implementation, the stitching module 1402a is configured to: stitch fourth images that do not include the target object in the plurality of first images, to obtain a stitched image that does not include the target object; and stitch the stitched image that does not include the target object and the stitched image including the target object, to obtain the first panoramic image of the target scene.

In a possible implementation, the stitching module 1402a is configured to: obtain a first calibration result based on the calibration target, where the first calibration result includes relative pose information of the plurality of image capture devices and the target object in the first time period; for any two adjacent first images, determine, based on the first calibration result, an overlapping field of view of image capture devices corresponding to the any two first images in the target scene, and select a background stitching location within the overlapping field of view; project the background stitching location onto the any two first images based on a projection transformation relationship, to obtain background stitching lines on the any two first images; and stitch the any two first images based on the background stitching lines, to obtain the first panoramic image of the target scene.

In a possible implementation, the stitching module 1402a is configured to receive the first calibration result sent by the image capture devices, where the first calibration result is determined by the image capture devices based on the calibration target included in the first images.

In a possible implementation, the stitching module 1402a is configured to: detect the calibration target in the plurality of first images, and determine, based on a detection result, third images including the target object; and perform location calibration on the calibration target in the third images, to obtain the first calibration result.

In a possible implementation, the stitching module 1402a is configured to: detect a corner in the third images; when four or more corners are detected, solve a homography transformation equation by using pixel coordinates of the corners in the images and known spatial coordinates of the corners in the target object; and obtain, based on a solution result, relative pose information of an image capture device capturing the third image and the target object in the first time period.

In a possible implementation, the target object is the mine shearer, and the image capture device is deployed on a support. The stitching module 1402a is configured to: in response to motion of the support, obtain a first forward slip amount and a first pillar height of the support before the motion, and a second forward slip amount and a second pillar height of the support after the motion; update an extrinsic parameter matrix of the image capture device based on the first forward slip amount, the first pillar height, the second forward slip amount, and the second pillar height of the support; and determine the first calibration result based on an updated extrinsic parameter matrix and the calibration target included in the plurality of first images.

In a possible implementation, the type of the at least one calibration target is a checkerboard, a QR code, or a customized pattern. The at least one calibration target is disposed on the target object by using a metal plate, a plastic plate, a cardboard, a cloth, glass, ceramics, quartz or a printed matter that is easy to paste, through paint printing, through paint spraying, or in another manner.

FIG. 14b is a schematic diagram of a structure of an apparatus for obtaining a panoramic image according to an embodiment of this application. The apparatus is used in an image stitching device, and the image stitching device is the image stitching device shown in FIG. 4. Based on the following plurality of modules shown in FIG. 14b, the apparatus for obtaining a panoramic image shown in FIG. 14b can perform all or some operations performed by a device for obtaining a panoramic image. It should be understood that the apparatus may include more additional modules than the shown modules or omit some of the shown modules. This is not limited in embodiments of this application. As shown in FIG. 14b, the apparatus includes:

a first obtaining module 1401b, configured to obtain a plurality of to-be-stitched first images, where the plurality of first images are obtained by a plurality of image capture devices by performing image capture on a target scene in a first time period, one first image corresponds to one image capture device, fields of view of the plurality of image capture devices capturing images are different, the target scene includes a moving target object, and at least one calibration target is disposed on a side that is of the target object and that is close to the plurality of image capture devices;

a second obtaining module 1402b, configured to obtain a first calibration result based on the calibration target, where the first calibration result includes relative pose information of the plurality of image capture devices and the target object in the first time period; and

a stitching module 1403b, configured to stitch the plurality of first images based on the first calibration result, to obtain a first panoramic image of the target scene, where

the first obtaining module 1401b is further configured to obtain a plurality of to-be-stitched second images, where the plurality of second images are obtained by the plurality of image capture devices by performing image capture on the target scene in a second time period, and one second image corresponds to one image capture device;

the second obtaining module 1402b is further configured to obtain a second calibration result based on the calibration target, where the second calibration result includes relative pose information of the plurality of image capture devices and the target object in the second time period; and

the stitching module 1403b is further configured to stitch the plurality of second images based on the second calibration result, to obtain a second panoramic image of the target scene, where a location of the target object in the second panoramic image is different from that in the first panoramic image.

In a possible implementation, the plurality of first images include at least two third images, and each third image includes the target object. The stitching module 1403b is configured to: determine a foreground area of each third image based on the first calibration result, where the foreground area of each third image includes the target object; stitch the at least two third images based on the foreground area of each third image, to obtain a stitched image including the target object; and obtain the first panoramic image of the target scene based on the stitched image including the target object.

In a possible implementation, the stitching module 1403b is configured to: obtain, based on the first calibration result, a projection transformation relationship corresponding to the third image, where the projection transformation relationship indicates a projection relationship between a model coordinate system of a three-dimensional model of the target object and a pixel coordinate system of the third image; obtain, based on a configuration parameter, coordinate locations that are of a plurality of boundary points on an outer contour of the target object and that are on the three-dimensional model of the target object, where the configuration parameter includes spatial size information of the target object and location information of the calibration target; project, based on the projection transformation relationship, the coordinate locations on the three-dimensional model onto the pixel coordinate system corresponding to the third image, to obtain a projection result; obtain a segmentation mask of the target object in the third image based on the projection result; and determine the foreground area of the third image based on the segmentation mask.

In a possible implementation, the stitching module 1403b is configured to: stitch the third images to obtain a first stitched image; stitch foreground areas of the third images to obtain a second stitched image; and fuse the first stitched image and the second stitched image to obtain the stitched image including the target object.

In a possible implementation, the stitching module 1403b is configured to: for any two adjacent third images, determine a reference area on the three-dimensional model of the target object based on foreground areas of the any two third images and the first calibration result, and determine a foreground stitching location on the reference area, where both the any two third images includes the reference area; project the foreground stitching location onto the any two third images based on the projection transformation relationship, to obtain foreground stitching lines on the any two third images; and stitch the any two third images based on the foreground stitching lines, to obtain the second stitched image.

In a possible implementation, the target object moves in the target scene. The stitching module 1403b is further configured to: obtain a correspondence between a motion speed of the target object and a movement speed of the stitching location; and determine, based on the correspondence, the foreground stitching location on the three-dimensional model of the target object in the second time period.

In a possible implementation, the stitching module 1403b is configured to: for the any two adjacent third images, determine, based on the first calibration result, an overlapping field of view of image capture devices corresponding to the any two third images in the target scene, and select a background stitching location within the overlapping field of view; project the background stitching location onto the any two third images based on the projection transformation relationship, to obtain background stitching lines on the any two third images; and stitch the any two third images based on the background stitching lines, to obtain the first stitched image.

In a possible implementation, the stitching module 1403b is configured to: align a target location in the first stitched image with that in the second stitched image, to obtain an aligned first stitched image and an aligned second stitched image; obtain, based on the first calibration result, segmentation masks of the target object that correspond to at least two third images; and fuse the aligned first stitched image and the aligned second stitched image based on the segmentation masks of the target object, to obtain the stitched image including the target object.

In a possible implementation, the stitching module 1403b is configured to: when at least one third image includes an obstacle, stitch the third images based on the foreground area of each third image, to obtain the stitched image including the target object.

In a possible implementation, the target object is a mine shearer. The stitching module 1403b is configured to: obtain a running angle of a rocker arm of the mine shearer; and obtain, based on the running angle and the configuration parameter, the coordinate locations that are of the plurality of boundary points on the outer contour of the target object and that are on the three-dimensional model of the target object.

In a possible implementation, the stitching module 1403b is further configured to: select a plurality of points at equal intervals on a horizontal central axis of the target object, and obtain, based on the projection transformation relationship, a plurality of projected points corresponding to the plurality of points on the stitched image including the target object; and perform, based on a horizontal ratio of intervals between the plurality of projected points, scaling transformation on the stitched image including the target object, to obtain the stitched image that includes the target object and on which intervals between the plurality of projected points are equal.

In a possible implementation, the stitching module 1403b is configured to: stitch fourth images that do not include the target object in the plurality of first images, to obtain a stitched image that does not include the target object; and stitch the stitched image that does not include the target object and the stitched image including the target object, to obtain the first panoramic image of the target scene.

In a possible implementation, the stitching module 1403b is configured to: for any two adjacent first images, determine, based on the first calibration result, an overlapping field of view of image capture devices corresponding to the any two first images in the target scene, and select a background stitching location within the overlapping field of view; project the background stitching location onto the any two first images based on a projection transformation relationship, to obtain background stitching lines on the any two first images; and stitch the any two first images based on the background stitching lines, to obtain the first panoramic image of the target scene.

In a possible implementation, the second obtaining module 1402b is configured to receive the first calibration result sent by the image capture devices, where the first calibration result is determined by the image capture devices based on the calibration target included in the first images.

In a possible implementation, the second obtaining module 1402b is configured to: detect the calibration target in the plurality of first images, and determine, based on a detection result, third images including the target object; and perform location calibration on the calibration target in the third images, to obtain the first calibration result.

In a possible implementation, the second obtaining module 1402b is configured to: detect a corner in the third images; when four or more corners are detected, solve a homography transformation equation by using pixel coordinates of the corners in the images and known spatial coordinates of the corners in the target object; and obtain, based on a solution result, relative pose information of an image capture device capturing the third image and the target object in the first time period.

In a possible implementation, the target object is the mine shearer, and the image capture device is deployed on a support. The second obtaining module 1402b is configured to: in response to motion of the support, obtain a first forward slip amount and a first pillar height of the support before the motion, and a second forward slip amount and a second pillar height of the support after the motion; update an extrinsic parameter matrix of the image capture device based on the first forward slip amount, the first pillar height, the second forward slip amount, and the second pillar height of the support; and determine the first calibration result based on an updated extrinsic parameter matrix and the calibration target included in the plurality of first images.

In a possible implementation, a type of the at least one calibration target is a checkerboard, a QR code, or a customized pattern. The at least one calibration target is disposed on the target object by using a metal plate, a plastic plate, a cardboard, a cloth, glass, ceramics, quartz or a printed matter that is easy to paste, through paint printing, through paint spraying, or in another manner.

In a possible implementation, the target object is the mine shearer, and the target scene is a coal mining working face.

It should be understood that, when the apparatuses provided in FIG. 14a and FIG. 14b implement functions of the apparatuses, division into the foregoing functional modules is merely used as an example for description. During actual application, the foregoing functions may be allocated to different functional modules for implementation based on a requirement. In other words, an internal structure of a device is divided into different functional modules, to implement all or some of the functions described above. Optionally, the foregoing functional modules may be implemented by using a same hardware unit, or may be implemented by using different hardware units. In addition, the apparatuses provided in the foregoing embodiments and the method embodiments pertain to the same concept. For a specific implementation process of the apparatus, refer to the method embodiments. Details are not described herein again.

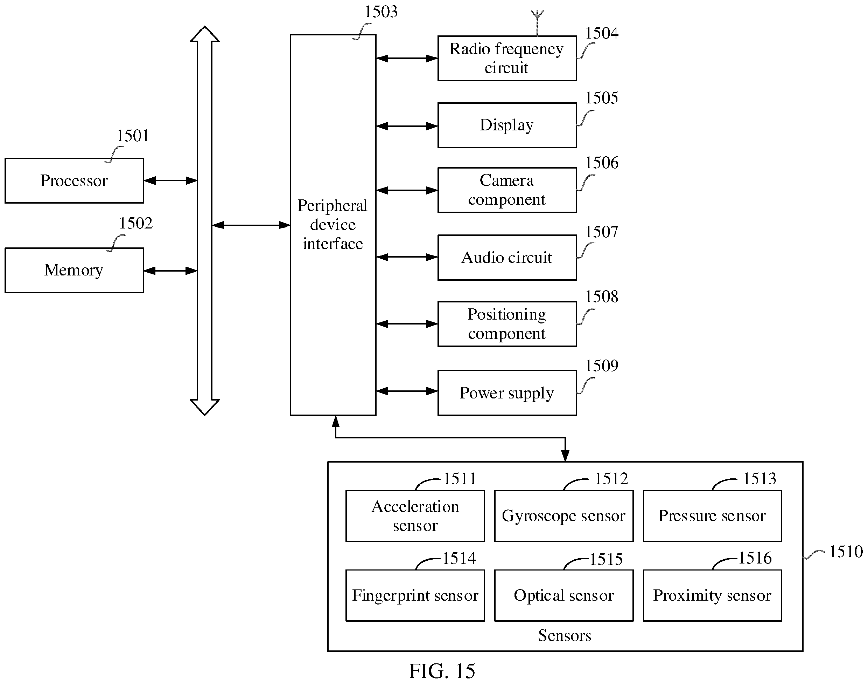

FIG. 15 is a schematic diagram of a structure of an electronic device for obtaining a panoramic video according to an embodiment of this application. The electronic device for obtaining a panoramic video may be a terminal, for example, may be a smartphone, a tablet computer, a vehicle-mounted terminal, a notebook computer, or a desktop computer. The terminal may also be referred to as another name, for example, user equipment, a portable terminal, a laptop terminal, or a desktop terminal.

Generally, the terminal includes a processor 1501 and a memory 1502.

The processor 1501 may include one or more processing cores, for example, a 4-core processor or an 8-core processor. The processor 1501 may be implemented in at least one hardware form of DSP (digital signal processing, digital signal processing), an FPGA (field-programmable gate array, field-programmable gate array), or a PLA (programmable logic array, programmable logic array). The processor 1501 may alternatively include a main processor and a coprocessor. The main processor is a processor configured to process data in a wake-up state, and is also referred to as a CPU (Central Processing Unit, central processing unit). The coprocessor is a low-power-consumption processor configured to process data in a standby state. In some embodiments, a GPU (Graphics Processing Unit, graphics processing unit) may be integrated into the processor 1501. The GPU is configured to render and draw content that needs to be displayed on a display. In some embodiments, the processor 1501 may further include an AI (Artificial Intelligence, artificial intelligence) processor. The AI processor is configured to process a computing operation related to machine learning.

The memory 1502 may include one or more computer-readable storage media, where the computer-readable storage medium may be in a non-transient state. The memory 1502 may further include a high-speed random access memory and a non-volatile memory, for example, one or more magnetic disk storage devices or flash memory storage devices. In some embodiments, the non-transient computer-readable storage medium in the memory 1502 is configured to store at least one instruction, and the at least one instruction is executed by the processor 1501 to implement the methods for obtaining a panoramic video provided in the method embodiments of this application.

In some embodiments, the terminal may optionally include a peripheral device interface 1503 and at least one peripheral device. The processor 1501, the memory 1502, and the peripheral device interface 1503 may be connected through a bus or a signal cable. Each peripheral device may be connected to the peripheral device interface 1503 through a bus, a signal cable, or a circuit board. For example, the peripheral device includes at least one of a radio frequency circuit 1504, a display 1505, a camera component 1506, an audio circuit 1507, a positioning component 1508, and a power supply 1509.

The peripheral device interface 1503 may be configured to connect at least one peripheral device related to an I/O (Input/Output, input/output) to the processor 1501 and the memory 1502. In some embodiments, the processor 1501, the memory 1502, and the peripheral device interface 1503 are integrated on a same chip or a same circuit board. In some other embodiments, any one or two of the processor 1501, the memory 1502, and the peripheral device interface 1503 may be implemented on a separate chip or a separate circuit board. This is not limited in this embodiment.

The radio frequency circuit 1504 is configured to receive and transmit an RF (Radio Frequency, radio frequency) signal. The RF signal is also referred to as an electromagnetic signal. The radio frequency circuit 1504 communicates with a communication network and another communication device by using the electromagnetic signal. The radio frequency circuit 1504 converts an electrical signal into an electromagnetic signal for transmission, or converts a received electromagnetic signal into an electrical signal. Optionally, the radio frequency circuit 1504 includes an antenna system, an RF transceiver, one or more amplifiers, a tuner, an oscillator, a digital signal processor, a codec chip set, a subscriber identity module card, and the like. The radio frequency circuit 1504 may communicate with another terminal according to at least one wireless communication protocol. The wireless communication protocol includes but is not limited to a metropolitan area network, mobile communication networks of various generations (2G, 3G, 4G, and 5G), a wireless local area network, and/or a wireless fidelity (wireless fidelity, Wi-Fi) network. In some embodiments, the radio frequency circuit 1504 may further include an NFC (Near Field Communication, near field communication)-related circuit. This is not limited in this application.

The display 1505 is configured to display a UI. The UI may include a graph, text, an icon, a video, and any combination thereof. When the display 1505 is a touch display, the display 1505 further has a capability of collecting a touch signal on a surface or above a surface of the display 1505. The touch signal may be input as a control signal into the processor 1501 for processing. In this case, the display 1505 may be further configured to provide a virtual button and/or a virtual keyboard. The virtual button and/or the virtual keyboard is also referred to as a soft button and/or a soft keyboard. In some embodiments, there may be one display 1505 that is disposed on a front panel of the terminal. In some other embodiments, there may be at least two displays 1505 that are respectively disposed on different surfaces of the terminal or are folded. In still some embodiments, the display 1505 may be a flexible display, and is disposed on a curved surface or a folded surface of the terminal. Even, the display 1505 may alternatively be set to a non-rectangular irregular pattern, namely, a special-shaped screen. The display 1505 may be made of a material like an LCD (liquid crystal display, liquid crystal display) or an OLED (organic light-emitting diode, organic light-emitting diode).

The camera component 1506 is configured to capture an image or a video. Optionally, the camera component 1506 includes a front-facing camera and a rear-facing camera. Generally, the front-facing camera is disposed on the front panel of the terminal, and the rear-facing camera is disposed on a back surface of the terminal. In some embodiments, there are at least two rear-facing cameras, each of which is any one of a main camera, a depth-of-field camera, a wide-angle camera, and a long-focus camera, to implement a background blurring function by fusing the main camera and the depth-of-field camera, panoramic photographing and VR (Virtual Reality, virtual reality) photographing functions by fusing the main camera and the wide-angle camera, or another fusion photographing function. In some embodiments, the camera component 1506 may further include a flash. The flash may be a single color temperature flash or a double color temperature flash. The double color temperature flash is a combination of a warm light flash and a cold light flash, and may be configured to perform light compensation at different color temperatures.

The audio circuit 1507 may include a microphone and a speaker. The microphone is configured to collect sound waves of a user and an environment, convert the sound waves into electrical signals, and input the electrical signals to the processor 1501 for processing, or input the electrical signals to the radio frequency circuit 1504 to implement voice communication. For a purpose of stereo collection or noise reduction, there may be a plurality of microphones that are separately disposed at different parts of the terminal. The microphone may be an array microphone or an omnidirectional microphone. The speaker is configured to convert an electrical signal from the processor 1501 or the radio frequency circuit 1504 into a sound wave. The speaker may be a conventional film speaker, or may be a piezoelectric ceramic speaker. When the speaker is the piezoelectric ceramic speaker, the speaker may convert an electrical signal into a sound wave audible to a human being, or convert an electrical signal into a sound wave inaudible to a human being for purposes such as ranging. In some embodiments, the audio circuit 1507 may further include a headset jack.

The positioning component 1508 is configured to locate a current geographical location of the terminal, to implement navigation or an LBS (Location Based Service, location based service). The positioning component 1508 may be a positioning component based on a GPS (Global Positioning System, global positioning system) of the United States, a BeiDou system of China, a GLONASS system of Russia, or a Galileo system of the European Union.

The power supply 1509 is configured to supply power to the components in the terminal. The power supply 1509 may be an alternating-current battery, a direct-current battery, a disposable battery, or a rechargeable battery. When the power supply 1509 includes the rechargeable battery, the rechargeable battery may support wired charging or wireless charging. The rechargeable battery may be further configured to support a fast charging technology.

In some embodiments, the terminal may further include one or more sensors 1510. The one or more sensors 1510 include but are not limited to an acceleration sensor 1511, a gyroscope sensor 1512, a pressure sensor 1513, a fingerprint sensor 1514, an optical sensor 1515, and a proximity sensor 1516.

The acceleration sensor 1511 may detect acceleration magnitudes on three coordinate axes of a coordinate system established by the terminal. For example, the acceleration sensor 1511 may be configured to detect components of gravity acceleration on the three coordinate axes. The processor 1501 may control, based on a gravity acceleration signal collected by the acceleration sensor 1511, the display 1505 to display the user interface in a transverse view or a longitudinal view. The acceleration sensor 1511 may be further configured to collect game data or motion data of the user.

The gyroscope sensor 1512 may detect a body direction and a rotation angle of the terminal, and the gyroscope sensor 1512 may cooperate with the acceleration sensor 1511 to collect a 3D action of the user on the terminal. The processor 1501 may implement, based on data collected by the gyroscope sensor 1512, the following functions: action sensing (for example, changing the UI based on a tilt operation of the user), image stabilization during photographing, game control, and inertial navigation.

The pressure sensor 1513 may be disposed on a side frame of the terminal and/or at a lower layer of the display 1505. When the pressure sensor 1513 is disposed on the side frame of the terminal, a grip signal performed by the user on the terminal may be detected, and the processor 1501 performs left and right hand recognition or a quick operation based on the grip signal collected by the pressure sensor 1513. When the pressure sensor 1513 is disposed at the lower layer of the display 1505, the processor 1501 controls an operability control on the UI interface based on a pressure operation performed by the user on the display 1505. The operability control includes at least one of a button control, a scroll bar control, an icon control, and a menu control.

The fingerprint sensor 1514 is configured to collect a fingerprint of the user. The processor 1501 identifies an identity of the user based on the fingerprint collected by the fingerprint sensor 1514, or the fingerprint sensor 1514 identifies an identity of the user based on the fingerprint collected by the fingerprint sensor. When identifying that the identity of the user is trusted, the processor 1501 authorizes the user to perform a related sensitive operation. The sensitive operation includes unlocking a screen, viewing encrypted information, downloading software, making payment, changing a setting, and the like. The fingerprint sensor 1514 may be disposed on a front surface, a back surface, or a side surface of the terminal. When a physical button or a vendor logo is disposed on the terminal, the fingerprint sensor 1514 may be integrated with the physical button or the vendor logo.

The optical sensor 1515 is configured to collect ambient light intensity. In an embodiment, the processor 1501 may control display luminance of the display 1505 based on the ambient light intensity collected by the optical sensor 1515. Specifically, when the ambient light intensity is high, the display luminance of the display 1505 is increased; or when the ambient light intensity is low, the display luminance of the display 1505 is decreased. In another embodiment, the processor 1501 may further dynamically adjust a photographing parameter of the camera component 1506 based on the ambient light intensity collected by the optical sensor 1515.

The proximity sensor 1516, also referred to as a distance sensor, is usually disposed on the front panel of the terminal. The proximity sensor 1516 is configured to collect a distance between the user and the front surface of the terminal. In an embodiment, when the proximity sensor 1516 detects that the distance between the user and the front surface of the terminal gradually decreases, the processor 1501 controls the display 1505 to switch from a screen-on state to a screen-off state. When the proximity sensor 1516 detects that the distance between the user and the front surface of the terminal gradually increases, the processor 1501 controls the display 1505 to switch from a screen-off state to a screen-on state.

A person skilled in the art may understand that the structure shown in FIG. 15 does not constitute a limitation on the electronic device. The electronic device may include more or fewer components than those shown in the figure, or combine some components, or have different component arrangements.

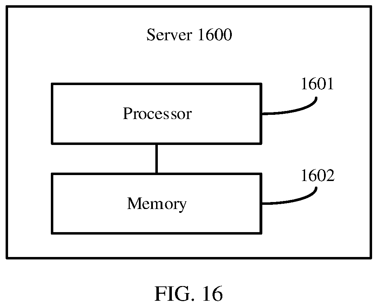

FIG. 16 is a schematic diagram of a structure of a server according to an embodiment of this application. The server 1600 may vary greatly due to different configurations or performance, and may include one or more processors 1601 and one or more memories 1602. The one or more memories 1602 store at least one program instruction, and the at least one program instruction is loaded and executed by the one or more processors 1601, to implement the methods for obtaining a panoramic video provided in the foregoing method embodiments. Certainly, the server 1600 may further have components such as a wired or wireless network interface, a keyboard, and an input/output interface, to perform an input/output. The server 1600 may further include another component configured to implement a function of a device. Details are not described herein.

Based on the electronic device shown in FIG. 15, an embodiment of this application further provides a system for obtaining a panoramic video. The system for obtaining a panoramic video includes a video stitching device and at least two image capture devices. Optionally, the video stitching device is the electronic device shown in FIG. 15 or the server shown in FIG. 16. For the method for obtaining a panoramic video performed by the video stitching device, refer to related descriptions in the embodiment shown in FIG. 5a, so that a panoramic video is obtained by stitching images captured by the at least two image capture devices. Details are not described herein again.

It should be understood that the processor may be a CPU, or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computer (RISC) machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information about a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. Through example but not limitative description, RAMs in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer-readable storage medium. The storage medium stores at least one instruction, and the instruction is loaded and executed by a processor, so that a computer implements either of the foregoing methods for obtaining a panoramic video.

An embodiment of this application further provides a computer program (product). When the computer program is executed by a computer, a processor or the computer can perform corresponding steps and/or procedures in the foregoing method embodiments.

An embodiment of this application further provides a chip, including a processor. The processor is configured to invoke, from a memory, and run instructions stored in the memory, so that a communication device on which the chip is installed performs either of the foregoing methods for obtaining a panoramic video.

An embodiment of this application further provides another chip, including an input interface, an output interface, a processor, and a memory. The input interface, the output interface, the processor, and the memory are connected to each other through an internal connection path. The processor is configured to execute code in the memory. When the code is executed, the processor is configured to perform either of the foregoing methods for obtaining a panoramic video.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, all or some of the procedure or functions according to this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive)), or the like.

A person of ordinary skill in the art may be aware that, with reference to embodiments disclosed in this specification, the method steps and the modules can be implemented by using software, hardware, firmware, or any combination thereof. To clearly describe interchangeability between the hardware and the software, the steps and composition of each embodiment have generally described above based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

When software is used to implement embodiments, all or some of embodiments may be implemented in a form of a computer program product. The computer program product includes one or more computer program instructions. For example, the methods in embodiments of this application may be described in a context of a machine-executable instruction. The machine-executable instruction is included in, for example, a program module executed in a device on a real or virtual processor of a target. Usually, the program module includes a routine, a program, a library, an object, a class, a component, a data structure, and the like, and executes a specific task or implements a specific abstract data structure. In various embodiments, functions of program modules may be combined or split between the described program modules. The machine-executable instruction for the program module may be executed locally or within a distributed device. In the distributed device, the program module may be located in both a local storage medium and a remote storage medium.

Computer program code used to implement the methods in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, a function/operation specified in the flowchart and/or block diagram is implemented. The program code may be executed all on a computer, partially on a computer, as an independent software package, partially on a computer and partially on a remote computer, or all on a remote computer or server.

In a context of embodiments of this application, the computer program code or related data may be carried by any appropriate carrier, so that a device, an apparatus, or a processor can perform various processing and operations described above. For example, the carrier includes a signal, a computer-readable medium, or the like.

For example, the signal may include propagating signals in electrical, optical, radio, sound, or other forms, such as a carrier wave and an infrared signal.

The machine-readable medium may be any tangible medium that includes or stores a program used for or related to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. More detailed examples of the machine-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It may be clearly understood by a person skilled in the art that, for convenient and brief description, for a detailed working process of the foregoing system, device, and module, refer to a corresponding process in the foregoing method embodiments. Details are not described herein again.

In several embodiments provided in this application, it should be understood that the disclosed apparatus, device, and method may be implemented in other manners. For example, the described device embodiment is merely an example. For example, the module division is merely logical function division and may be other division during actual implementation. For example, a plurality of modules or components may be combined or integrated into another system, or some features may be omitted or not performed. In addition, the displayed or discussed mutual couplings or direct couplings or communication connections may be implemented through some interfaces, and the indirect couplings or communication connections between the devices or modules may be electrical connections, mechanical connections, or connections in other forms.

The modules described as separate parts may or may not be physically separate, and parts displayed as modules may or may not be physical modules, may be located in one location, or may be distributed on a plurality of network modules. Some or all of the modules may be selected based on an actual requirement to achieve the objectives of the solutions in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of the software functional module and sold or used as an independent product, the integrated module may be stored in a computer-readable storage medium. Based on such an understanding, the technical solutions of this application essentially, or the part contributing to the related art, or all or some of the technical solutions may be implemented in the form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

In this application, the terms "first", "second", and the like are used to distinguish between same or similar items whose effects and functions are basically the same. It should be understood that there is no logical or time-sequence dependency among "first", "second", and "nth", and a quantity and an execution sequence are not limited. It should be further understood that although the terms such as "first" and "second" are used in the following descriptions to describe various elements, these elements should not be limited by the terms. These terms are merely used to distinguish one element from another element. For example, without departing from the scope of the various examples, a first image may be referred to as a second image, and similarly, a second image may be referred to as a first image. Both the first image and the second image may be images, and in some cases, may be separate and different images.

It should be further understood that sequence numbers of processes do not mean execution sequences in embodiments of this application. The execution sequences of the processes should be determined based on functions and internal logic of the processes, and should not be construed as any limitation on the implementation processes in embodiments of this application.

In this application, the term "at least one" means one or more. In this application, the term "a plurality of" means two or more. For example, a plurality of second packets mean two or more second packets. The terms "system" and "network" usually may be used interchangeably in this specification.

It should be understood that the terms used in the descriptions of various examples in this specification are merely intended to describe specific examples, but are not intended to constitute a limitation. The terms "one" ("a" and "an") and "the" of singular forms used in the descriptions of various examples and the appended claims are also intended to include plural forms, unless otherwise specified in the context clearly.

It should be further understood that, the term "and/or" used in this specification indicates and includes any or all possible combinations of one or more items in associated listed items. The term "and/or" describes an association relationship between associated objects, and indicates that three relationships may exist. For example, A and/or B may indicate the following three cases: Only A exists, both A and B exist, and only B exists. In addition, the character "/" in this application usually indicates an "or" relationship between associated objects.

It should be further understood that the term "include" (or "includes", "including", "comprises", and/or "comprising"), when being used in this specification, specifies the presence of stated features, integers, steps, operations, elements, and/or components, but does not preclude the presence or addition of one or more other features, integers, steps, operations, elements, components, and/or groups thereof.

It should be further understood that the term "if" may be interpreted as a meaning of "when" ("when" or "upon"), "in response to determining", or "in response to detecting". Similarly, according to a context, the phrase "if it is determined that" or "if (a stated condition or event) is detected" may be interpreted as a meaning of "when it is determined that", "in response to determining", "when (a stated condition or event) is detected", or "in response to detecting (a stated condition or event)".

It should be understood that determining B based on A does not mean that B is determined only based on A, and B may alternatively be determined based on A and/or other information.

It should further be understood that "one embodiment", "an embodiment", or "a possible implementation" mentioned throughout this specification means that particular features, structures, or characteristics related to embodiments or implementations are included in at least one embodiment of this application. Therefore, "in one embodiment", "in an embodiment", or "in a possible implementation" appearing throughout this specification does not necessarily mean a same embodiment. In addition, these particular features, structures, or characteristics may be combined in one or more embodiments in any appropriate manner.

The foregoing descriptions are merely optional embodiments of this application, but are not intended to limit this application. Any modification, equivalent replacement, or improvement made without departing from the principle of this application should fall within the protection scope of this application.

**Claims**

1. A method for obtaining a panoramic video, wherein the method comprises:

   obtaining a plurality of to-be-stitched first images, wherein the plurality of first images are obtained by a plurality of image capture devices by performing image capture on a target scene in a first time period, the plurality of first images are in a one-to-one correspondence with the plurality of image capture devices, fields of view of the plurality of image capture devices capturing images are different, the target scene comprises a moving target object, and at least one calibration target is disposed on a side that is of the target object and that is close to the plurality of image capture devices;

   stitching the plurality of first images based on the calibration target, to obtain a first panoramic image of the target scene;

   obtaining a plurality of to-be-stitched second images, wherein the plurality of second images are obtained by the plurality of image capture devices by performing image capture on the target scene in a second time period, and the plurality of second images are in a one-to-one correspondence with the plurality of image capture devices;

   stitching the plurality of second images based on the calibration target, to obtain a second panoramic image of the target scene; and

   obtaining a panoramic video, wherein the panoramic video comprises the first panoramic image and the second panoramic image, and a location of the target object in the second panoramic image is different from that in the first panoramic image.

2. The method according to claim 1, wherein the stitching the plurality of first images based on the calibration target, to obtain a first panoramic image of the target scene comprises: stitching the plurality of first images based on a configuration parameter and the calibration target, to obtain the first panoramic image of the target scene; and

   the stitching the plurality of second images based on the calibration target, to obtain a second panoramic image of the target scene comprises: stitching the plurality of second images based on the configuration parameter and the calibration target, to obtain the second panoramic image of the target scene, wherein the configuration parameter comprises at least one of size information of the target object, location information of the calibration target, and a type of the calibration target.

3. The method according to claim 1 or 2, wherein the target object is a mine shearer, and the target scene is a coal mining working face.

4. The method according to claim 2 or 3, wherein the stitching the plurality of first images based on a configuration parameter and the calibration target, to obtain the first panoramic image of the target scene comprises:

   obtaining a first calibration result based on the calibration target, wherein the first calibration result comprises relative pose information of the plurality of image capture devices and the target object in the first time period; and stitching the plurality of first images based on the first calibration result and the configuration parameter, to obtain the first panoramic image of the target scene; and

the stitching the plurality of second images based on the configuration parameter and the calibration target, to obtain the second panoramic image of the target scene comprises: obtaining a second calibration result based on the calibration target, wherein the second calibration result comprises relative pose information of the plurality of image capture devices and the target object in the second time period; and stitching the plurality of second images based on the second calibration result and the configuration parameter, to obtain the second panoramic image of the target scene.

5. The method according to claim 4, wherein the plurality of first images comprise at least two third images, and each third image comprises the target object; and the stitching the plurality of first images based on the first calibration result and the configuration parameter, to obtain the first panoramic image of the target scene comprises:

determining a foreground area of each third image based on the first calibration result and the configuration parameter, wherein the foreground area of each third image comprises the target obj ect;
stitching the at least two third images based on the foreground area of each third image, to obtain a stitched image comprising the target object; and
obtaining the first panoramic image of the target scene based on the stitched image comprising the target object.

6. The method according to claim 5, wherein the determining a foreground area of each third image based on the first calibration result and the configuration parameter comprises:

obtaining, based on the first calibration result, a projection transformation relationship corresponding to the third image, wherein the projection transformation relationship indicates a projection relationship between a model coordinate system of a three-dimensional model of the target object and a pixel coordinate system of the third image;
obtaining, based on the configuration parameter, coordinate locations that are of a plurality of boundary points on an outer contour of the target object and that are on the three-dimensional model, wherein the configuration parameter comprises the size information of the target object and the location information of the calibration target;
projecting, based on the projection transformation relationship, the coordinate locations on the three-dimensional model onto the pixel coordinate system corresponding to the third image, to obtain a projection result;
obtaining a segmentation mask of the target object in the third image based on the projection result; and
determining the foreground area of the third image based on the segmentation mask.

7. The method according to claim 5 or 6, wherein the stitching the at least two third images based on the foreground area of each third image, to obtain a stitched image comprising the target object comprises:

stitching the third images to obtain a first stitched image;
stitching foreground areas of the third images to obtain a second stitched image; and
fusing the first stitched image and the second stitched image to obtain the stitched image comprising the target object.

8. The method according to claim 7, wherein the stitching foreground areas of the third images to obtain a second stitched image comprises:

for any two adjacent third images, determining a reference area on the three-dimensional model of the target object based on foreground areas of the any two third images and the first calibration result, and determining a foreground stitching location on the reference area, wherein both the any two third images comprises the reference area;
projecting the foreground stitching location onto the any two third images based on the projection transformation relationship, to obtain foreground stitching lines on the any two third images; and
stitching the any two third images based on the foreground stitching lines, to obtain the second stitched image.

9. The method according to claim 8, wherein after the determining a foreground stitching location on the reference area, the method further comprises:

obtaining a correspondence between a motion speed of the target object and a movement speed of the stitching location; and
determining, based on the correspondence, the foreground stitching location on the three-dimensional model in the second time period.

**10.** The method according to any one of claims 7 to 9, wherein the stitching the third images to obtain a first stitched image comprises:

> for the any two adjacent third images, determining, based on the first calibration result, an overlapping field of view of image capture devices corresponding to the any two third images in the target scene, and selecting a background stitching location within the overlapping field of view; projecting the background stitching location onto the any two third images based on the projection transformation relationship, to obtain background stitching lines on the any two third images; and
> stitching the any two third images based on the background stitching lines, to obtain the first stitched image.

**11.** The method according to any one of claims 7 to 10, wherein the fusing the first stitched image and the second stitched image to obtain the stitched image comprising the target object comprises:

> aligning a target location in the first stitched image with that in the second stitched image, to obtain an aligned first stitched image and an aligned second stitched image;
> obtaining, based on the first calibration result, segmentation masks of the target object that correspond to the at least two third images; and
> fusing the aligned first stitched image and the aligned second stitched image based on the segmentation masks of the target object, to obtain the stitched image comprising the target object.

**12.** The method according to claim 5 or 6, wherein the stitching the at least two third images based on the foreground area of each third image, to obtain a stitched image comprising the target object comprises:
when at least one third image comprises an obstacle, stitching the third images based on the foreground area of each third image, to obtain the stitched image comprising the target object.

**13.** The method according to claim 6, wherein the target object is the mine shearer; and the obtaining, based on the configuration parameter, coordinate locations that are of a plurality of boundary points on an outer contour of the target object and that are on the three-dimensional model comprises:

> obtaining a running angle of a rocker arm of the mine shearer; and
> obtaining, based on the running angle and the configuration parameter, the coordinate locations that are of the plurality of boundary points on the outer contour of the target object and that are on the three-dimensional model.

**14.** The method according to any one of claims 5 to 13, wherein after the obtaining the stitched image comprising the target object, the method further comprises:

> selecting a plurality of points on a horizontal central axis of the target object, and obtaining, based on the projection transformation relationship, a plurality of projected points corresponding to the plurality of points on the stitched image comprising the target object; and
> performing, based on a horizontal ratio of intervals between the plurality of projected points, scaling transformation on the stitched image comprising the target object, to obtain the stitched image comprising the target object.

**15.** The method according to any one of claims 5 to 14, wherein the obtaining the first panoramic image of the target scene based on the stitched image comprising the target object comprises:

> stitching fourth images that do not comprise the target object and that are in the plurality of first images, to obtain a stitched image that does not comprise the target object; and
> stitching the stitched image that does not comprise the target object and the stitched image comprising the target object, to obtain the first panoramic image of the target scene.

**16.** The method according to claim 1, wherein the stitching the plurality of first images based on the calibration target, to obtain a first panoramic image of the target scene comprises:

> obtaining a first calibration result based on the calibration target, wherein the first calibration result comprises relative pose information of the plurality of image capture devices and the target object in the first time period;
> for any two adjacent first images, determining, based on the first calibration result, an overlapping field of view of image capture devices corresponding to the any two first images in the target scene, and selecting a background stitching location within the overlapping field of view; projecting the background stitching location onto the any two first images based on a projection transformation relationship, to obtain background stitching lines on the any two first images; and
> stitching the any two first images based on the background stitching lines, to obtain the first panoramic image of the target scene.

**17.** The method according to any one of claims 4 to 16, wherein the obtaining a first calibration result based on the calibration target comprises:
receiving the first calibration result sent by the image capture devices, wherein the first calibration result is determined by the image capture devices based on the calibration target comprised in the first images.

**18.** The method according to any one of claims 4 to 16, wherein the obtaining a first calibration result based on the calibration target comprises:

detecting the calibration target in the plurality of first images, and determining, based on a detection result, third images comprising the target object; and

performing location calibration on the calibration target in the third images, to obtain the first calibration result.

**19.** The method according to any one of claims 4 to 16, wherein the target object is the mine shearer, and the image capture device is deployed on a support; and
the obtaining a first calibration result based on the calibration target comprises:

in response to motion of the support, obtaining a first forward slip amount and a first pillar height of the support before the motion, and a second forward slip amount and a second pillar height of the support after the motion;

updating an extrinsic parameter matrix of the image capture device based on the first forward slip amount, the first pillar height, the second forward slip amount, and the second pillar height of the support; and

determining the first calibration result based on an updated extrinsic parameter matrix and the calibration target comprised in the plurality of first images.

**20.** The method according to any one of claims 1 to 19, wherein a type of the at least one calibration target is a checkerboard, a QR code, or a customized pattern.

**21.** An apparatus for obtaining a panoramic video, wherein the apparatus comprises:

a first obtaining module, configured to obtain a plurality of to-be-stitched first images, wherein the plurality of first images are obtained by a plurality of image capture devices by performing image capture on a target scene in a first time period, the plurality of first images are in a one-to-one correspondence with the plurality of image capture devices, fields of view of the plurality of image capture devices capturing images are different, the target scene comprises a moving target object, and at least one calibration target is disposed on a side that is of the target object and that is close to the plurality of image capture devices;

a stitching module, configured to stitch the plurality of first images based on the calibration target, to obtain a first panoramic image of the target scene, wherein

the first obtaining module is further configured to obtain a plurality of to-be-stitched second images, wherein the plurality of second images are obtained by the plurality of image capture devices by performing image capture on the target scene in a second time period, and the plurality of second images are in a one-to-one correspondence with the plurality of image capture devices; and

the stitching module is further configured to stitch the plurality of second images based on the calibration target, to obtain a second panoramic image of the target scene; and

a second obtaining module, configured to obtain a panoramic video, wherein the panoramic video comprises the first panoramic image and the second panoramic image, and a location of the target object in the second panoramic image is different from that in the first panoramic image.

**22.** The apparatus according to claim 21, wherein the stitching module is configured to: stitch the plurality of first images based on a configuration parameter and the calibration target, to obtain the first panoramic image of the target scene; and stitch the plurality of second images based on the configuration parameter and the calibration target, to obtain the second panoramic image of the target scene, wherein the configuration parameter comprises at least one of size information of the target object, location information of the calibration target, and a type of the calibration target.

**23.** The apparatus according to claim 21 or 22, wherein the target object is a mine shearer, and the target scene is a coal mining working face.

**24.** The apparatus according to claim 22 or 23, wherein the stitching module is configured to: obtain a first calibration result based on the calibration target, wherein the first calibration result comprises relative pose information of the plurality of image capture devices and the target object in the first time period; stitch the plurality of first images based on the first calibration result and the configuration parameter, to obtain the first panoramic image of the target scene; obtain a second calibration result based on the calibration target, wherein the second calibration result comprises relative pose information of the plurality of image capture devices and the target object in the second time period; and stitch the plurality of second images based on the second calibration result and the configuration parameter, to obtain the second panoramic image of the target scene.

25. The apparatus according to claim 24, wherein the plurality of first images comprise at least two third images, and each third image comprises the target object; and the stitching module is configured to: determine a foreground area of each third image based on the first calibration result and the configuration parameter, wherein the foreground area of each third image comprises the target object; stitch the at least two third images based on the foreground area of each third image, to obtain a stitched image comprising the target object; and obtain the first panoramic image of the target scene based on the stitched image comprising the target object.

26. The apparatus according to claim 25, wherein the stitching module is configured to: obtain, based on the first calibration result, a projection transformation relationship corresponding to the third image, wherein the projection transformation relationship indicates a projection relationship between a model coordinate system of a three-dimensional model of the target object and a pixel coordinate system of the third image; obtain, based on the configuration parameter, coordinate locations that are of a plurality of boundary points on an outer contour of the target object and that are on the three-dimensional model, wherein the configuration parameter comprises the size information of the target object and the location information of the calibration target; and project, based on the projection transformation relationship, the coordinate locations on the three-dimensional model onto the pixel coordinate system corresponding to the third image, to obtain a projection result; obtain a segmentation mask of the target object in the third image based on the projection result; and determine the foreground area of the third image based on the segmentation mask.

27. The apparatus according to claim 25 or 26, wherein the stitching module is configured to: stitch the third images to obtain a first stitched image; stitch foreground areas of the third images to obtain a second stitched image; and fuse the first stitched image and the second stitched image to obtain the stitched image comprising the target object.

28. The apparatus according to claim 25 or 26, wherein the stitching module is configured to: when at least one third image comprises an obstacle, stitch the third images based on the foreground area of each third image, to obtain the stitched image comprising the target object.

29. The apparatus according to claim 21, wherein the stitching module is configured to: obtain a first calibration result based on the calibration target, wherein the first calibration result comprises relative pose information of the plurality of image capture devices and the target object in the first time period; for any two adjacent first images, determine, based on the first calibration result, an overlapping field of view of image capture devices corresponding to the any two first images in the target scene, and select a background stitching location within the overlapping field of view; project the background stitching location onto the any two first images based on a projection transformation relationship, to obtain background stitching lines on the any two first images; and stitch the any two first images based on the background stitching lines, to obtain the first panoramic image of the target scene.

30. A system for obtaining a panoramic video, wherein the system comprises a video stitching device and at least two image capture devices;

the at least two image capture devices are configured to perform image capture on a target scene; and
the video stitching device is configured to perform the method according to any one of claims 1 to 20 to stitch images captured by the at least two image capture devices, to obtain a panoramic video.

31. The system according to claim 30, wherein the system further comprises a display device; and the display device is configured to display the panoramic video obtained by the video stitching device.

32. An electronic device, wherein the electronic device comprises a processor and a memory, the memory stores at least one piece of program code, and the at least one piece of program code is loaded and executed by the processor, so that the electronic device implements the method for obtaining a panoramic video according to any one of claims 1 to 20.

33. A computer-readable storage medium, wherein the computer storage medium stores at least one instruction, and the at least one instruction is loaded and executed by a processor, so that a computer implements the method for obtaining a panoramic video according to any one of claims 1 to 20.

34. A computer program product, wherein the computer program product comprises computer program code, and the computer program code is loaded and executed by a computer, so that the computer implements the method for obtaining a panoramic video according to any one of claims 1 to 20.

Coal wall

Hydraulic support

Coal mining tunnel

FIG. 1

Coal wall

Mine shearer

2.2 meters

3.8 meters

Camera

FIG. 2

Left image

Same content in a background

Right image

Same content in a foreground

FIG. 3

FIG. 4

Obtain a plurality of to-be-stitched first images — 501a

Stitch the plurality of first images based on a calibration target, to obtain a first panoramic image of a target scenario — 502a

Obtain a plurality of to-be-stitched second images — 503a

Stitch the plurality of second images based on the calibration target, to obtain a second panoramic image of the target scenario — 504a

Obtain a panoramic video, where the panoramic video includes the first panoramic image and the second panoramic image — 505a

FIG. 5a

Obtain a plurality of to-be-stitched first images

501b

Obtain a first calibration result based on a calibration target, where the first calibration result includes relative pose information of a plurality of image capture devices and a target object in a first time period

502b

Stitch the plurality of first images based on the first calibration result, to obtain a first panoramic image of a target scenario

503b

Obtain a plurality of to-be-stitched second images

504b

Obtain a second calibration result based on the calibration target, where the second calibration result includes relative pose information of the plurality of image capture devices and the target object in a second time period

505b

Stitch the plurality of second images based on the second calibration result, to obtain a second panoramic image of the target scenario, where a location of the target object in the second panoramic image is different from that in the first panoramic image

506b

FIG. 5b

| Obtain a plurality of to-be-stitched first images | 501c |

↓

| Stitch the plurality of first images based on a configuration parameter and a calibration target, to obtain a first panoramic image of a target scenario | 502c |

↓

| Obtain a plurality of to-be-stitched second images | 503c |

↓

| Stitch the plurality of second images based on the configuration parameter and the calibration target, to obtain a second panoramic image of the target scenario | 504c |

↓

| Obtain a panoramic video, where the panoramic video includes the first panoramic image and the second panoramic image | 505c |

FIG. 5c

Roller

Calibration target

Rocker arm

FIG. 6

1800

1500    7500    1000

2000    2000

FIG. 7

| | | | |
|---|---|---|---|
| Length of a level-1 body | ☐ | Quantity of calibration targets | ☐ |
| Width of the level-1 body | ☐ | Location of a first calibration target | ☐ |
| Length of a level-2 body | ☐ | Location of a second calibration target | ☐ |
| Length of a rocker arm | ☐ | Location of a third calibration target | ☐ |
| Width of the rocker arm | ☐ | Size of a calibration target | ☐ |
| Diameter of a roller | ☐ | ... | |

FIG. 8

FIG. 9

Before correction

After correction

FIG. 10

First stitched image

Second stitched image

Segmentation mask

Fusion result

FIG. 11

Running status parameter

FIG. 12

```
                              ┌─────────┐
                              │  Start  │
                              └────┬────┘
                   ┌───────────────┴───────────────┐
                   ▼                               ▼
            ┌──────────────┐              ┌──────────────┐
            │  Left image  │              │  Right image │
            └──────┬───────┘              └──────┬───────┘
                   └───────────────┬───────────────┘
                                   │
```

Camera parameter

Mine shearer parameter

Calibration target parameter

Calibration module

Calibration target detection

Online camera calibration

Camera pitch correction

Front-view correction

Stitching module

Foreground-background segmentation

Foreground stitching

Foreground stitched image

Background stitching

Background stitched image

Foreground-background adaptive fusion

Panoramic stitched image

FIG. 13

Apparatus for obtaining a panoramic video

First obtaining module — 1401a

Stitching module — 1402a

Second obtaining module — 1403a

FIG. 14a

Apparatus for obtaining a panoramic image

First obtaining module — 1401b

Second obtaining module — 1402b

Stitching module — 1403b

FIG. 14b

1503

1501 Processor

1502 Memory

Peripheral device interface

1504 Radio frequency circuit

1505 Display

1506 Camera component

1507 Audio circuit

1508 Positioning component

1509 Power supply

1511 Acceleration sensor

1512 Gyroscope sensor

1513 Pressure sensor

1514 Fingerprint sensor

1515 Optical sensor

1516 Proximity sensor

Sensors

1510

FIG. 15

FIG. 16

**INTERNATIONAL SEARCH REPORT**

| International application No. |
|---|
| **PCT/CN2022/137331** |

**A. CLASSIFICATION OF SUBJECT MATTER**

G06T 3/40(2006.01)i

According to International Patent Classification (IPC) or to both national classification and IPC

**B. FIELDS SEARCHED**

Minimum documentation searched (classification system followed by classification symbols)

IPC:G06T,G06K,H04N

Documentation searched other than minimum documentation to the extent that such documents are included in the fields searched

Electronic data base consulted during the international search (name of data base and, where practicable, search terms used)

VEN; CNABS; CNTXT; WOTXT; EPTXT; USTXT; CNKI; IEEE: 拼接, 全景, 标定, 标记, 棋盘, 黑白格, 采煤, splice, panorama, mark, calibration, mine

**C. DOCUMENTS CONSIDERED TO BE RELEVANT**

| Category* | Citation of document, with indication, where appropriate, of the relevant passages | Relevant to claim No. |
|---|---|---|
| Y | CN 113055613 A (SHANGHAI YUNHUA TECHNOLOGY CO., LTD.) 29 June 2021 (2021-06-29) description, paragraphs [0044]-[0067] | 1-34 |
| Y | CN 112116068 A (JINAN INSPUR HI-TECH INVESTMENT AND DEVELOPMENT CO., LTD.) 22 December 2020 (2020-12-22) description, paragraphs [0023]-[0040] | 1-34 |
| A | CN 110782394 A (Unit 63861 OF PLA) 11 February 2020 (2020-02-11) entire document | 1-34 |
| A | CN 104966063 A (CHINA UNIVERSITY OF MINING AND TECHNOLOGY) 07 October 2015 (2015-10-07) entire document | 1-34 |
| A | US 2017061243 A1 (INTERNATIONAL BUSINESS MACHINES CORP.) 02 March 2017 (2017-03-02) entire document | 1-34 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 February 2023** | **27 February 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

| International application No. |
| --- |
| **PCT/CN2022/137331** |

| Patent document cited in search report | | | Publication date (day/month/year) | Patent family member(s) | | | Publication date (day/month/year) |
| --- | --- | --- | --- | --- | --- | --- | --- |
| CN | 113055613 | A | 29 June 2021 | None | | | |
| CN | 112116068 | A | 22 December 2020 | None | | | |
| CN | 110782394 | A | 11 February 2020 | None | | | |
| CN | 104966063 | A | 07 October 2015 | None | | | |
| US | 2017061243 | A1 | 02 March 2017 | US | 10204291 | B2 | 12 February 2019 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111506482